# EUROPEAN PATENT APPLICATION

(11) **EP 4 553 117 A1**
(43) Date of publication of application: **14.05.2025**
(21) Application number: 23835539.0
(22) Date of filing: 04.07.2023
(51) Int. Cl.: C08L 77/00, B29B 7/00, B29C 48/00, B29C 48/28, B29C 48/395, B29C 48/80, B29C 48/86, B32B 27/32, B32B 27/34, C08J 5/18

(54) **POLYAMIDE RESIN COMPOSITION, FILM AND FILM LAMINATE COMPRISING SAME, AND PELLET MIXTURE**

(30) Priority: 04.07.2022 JP 2022107891
(71) Applicant: UBE Corporation, Ube-shi, Yamaguchi 755-8633 (JP)
(72) Inventor: FUJINO Hiroshi, Ube-shi, Yamaguchi 755-8633 (JP); ONO Keitarou, Ube-shi, Yamaguchi 755-8633 (JP); YABU Naoyasu, Ube-shi, Yamaguchi 755-8633 (JP); YAMASHITA Atsushi, Ube-shi, Yamaguchi 755-8633 (JP)
(74) Representative: Hoffmann Eitle
(86) International application number: PCT/JP2023/024827
(87) International publication number: WO 2024/010008

(57) **Abstract**

Provided are: a polyamide resin composition, which can provide a film that does not have poor appearance arising from film gels and has excellent transparency, puncture strength, and pinhole resistance and which makes material recycling possible; and a film and a film laminate that utilize the polyamide resin composition.

A polyamide resin composition comprising, with respect to 100 mass% of the polyamide resin composition, 70-95 mass% of an aliphatic polyamide resin (A), 5-30 mass% of an ethylene/C3-C8 α-olefin copolymer (B) that has functional groups, and 0-5 mass% of another component (C), wherein: the ratio of the number of methylene groups to the number of amide groups in the aliphatic polyamide resin (A) is 3-11; and when the number average molecular weight and weight average molecular weight by GPC measurement of the polyamide resin composition are Mn and Mw, respectively, Mn is 25,000-46,000, and Mw/Mn is 1.5-3.0.

## Description

### TECHNICAL FIELD

The present invention relates to a polyamide resin composition, to a film and a film laminate including the same, and to a pellet mixture.

### BACKGROUND ART

In recent years, plastic waste recycling is desired in view of problems, such as global warming and ocean pollution. Packaging materials, such as food packages, are often laminates of dissimilar resins, such as polyamides and polyolefins, in order to add functions. A conceivable approach to recycling of these wastes is to separate the layers by delamination, which is, however, technically difficult and impractical. On the other hand, direct recycling of laminates without delamination results in considerably low properties due to the poor compatibility of the dissimilar resins, and the recycled mixed resins have very limited use applications. Compatibilizers can be used in order to allow dissimilar resins to mix well with one another. Modified ethylene/α-olefin copolymers are known as compatibilizers for polyamides and polyolefins.

Patent Literature 1 discloses a multilayer structure including a polar layer containing a nylon and a polyolefin layer, wherein the polyolefin layer includes a compatibilizer component including an anhydride and/or carboxylic acid functionalized ethylene/α-olefin interpolymer having a specific melt viscosity and a specific density. The disclosure has shown that waste of the multilayer structures is recyclable.

Patent Literature 2 discloses a laminate with enhanced recyclability that has a layered structure including a sealant layer and a reinforcing layer, wherein the sealant layer contains a linear low-density polyethylene and an unsaturated carboxylic acid-modified polyolefin as a compatibilizer, and the reinforcing layer contains a polyamide resin.

Patent Literature 3 discloses a polyamide resin composition including 100 parts by mass of a polyamide (A) and 3 to 30 parts by mass of an acid-modified polyethylene (E) having a density of 0.915 to 0.975 g/cm³. The disclosure has shown that the composition has excellent heat aging resistance and is suited for automobile parts.

Patent Literature 4 discloses a polyamide resin blend obtained by blending a masterbatch (A) prepared by melt-mixing a polyamide resin (a) and a modified ethylene/α-olefin copolymer in a ratio of 40/60 to 99/1 (by weight); with a polyamide resin (B) in a ratio of 1/99 to 60/40 (by weight). The disclosure has shown that a polyamide film formed from the blend is excellent in pinhole resistance and transparency and also has few fisheyes.

Furthermore, Patent Literature 5 discloses a pelletizable thermoplastic polymer composition including a polyamide (a) and a polymer (b) polymerized from maleic anhydride and an olefin. For example, the disclosure has shown that the composition can give products with increased durability.

Patent Literature 6 discloses a master batch composition for use in preparing a polyamide formulation from a polyamide, including an olefin-maleic anhydride copolymer and one or more carrier resins. For example, the disclosure has shown that the master batch composition has good compatibility and does not phase separate.

### CITATION LIST

### Patent Literature

Patent Literature 1: JP 2018-502743 A
Patent Literature 2: JP 2020-11415 A
Patent Literature 3: JP 2019-38938 A
Patent Literature 4: JP 2000-109685 A
Patent Literature 5: JP 2014-503003 A
Patent Literature 6: JP 2015-525813 A

### SUMMARY OF INVENTION

### Technical Problem

The recyclability of waste of laminates will be enhanced by adding compatibilizers to the laminates. Patent Literatures 1 and 2 only disclose that a compatibilizer is added to the polyolefin layer, and do not disclose the addition of a compatibilizer to the polyamide layer. In general, the addition of a compatibilizer, such as a modified polyolefin, to a polyamide results in problems, such as the occurrence of film gels and a decrease in transparency.

The polyamide resin composition disclosed in Patent Literature 3 includes a polyamide and an acid-modified polyolefin. However, this composition is intended for use as automobile parts and is hardly applicable to packaging materials, such as food packages, that are flawed by, for example, the occurrence of film gels or low transparency.

Films obtained from the polyamide resin blend of Patent Literature 4 have some degrees of properties, such as pinhole resistance, transparency, and film gel resistance, but the levels of these properties are still insufficient. Furthermore, the technique does not take the recyclability of waste into consideration. Thus, the films are also insufficient in recyclability.

Films obtained from the compositions of Patent Literatures 5 and 6 are insufficient in properties, such as film gel resistance. Furthermore, recyclability is insufficient when the films are made into laminates of dissimilar resins, such as polyamides and polyolefins.

Objects of the present invention are to provide a material-recyclable polyamide resin composition capable of giving a film that is free from appearance deterioration by film gels and excels in transparency, puncture strength, and pinhole resistance, and to provide a film and a film laminate using the same. Another object of the present invention is to provide a pellet mixture suitably used to produce the polyamide resin composition, the film, and the film laminate.

### Solution to Problem

The present invention pertains to the following [1] to [17].
[1] A polyamide resin composition comprising, based on 100 mass% of the polyamide resin composition, 70 to 95 mass% of an aliphatic polyamide resin (A), 5 to 30 mass% of an ethylene/C3-C8 α-olefin copolymer (B) having a functional group, and 0 to 5 mass% of an additional component (C); the aliphatic polyamide resin (A) having a ratio of the number of methylene groups to the number of amide groups of 3 or more and 11 or less; and the polyamide resin composition having an Mn of 25,000 to 46,000 and an Mw/Mn of 1.5 to 3.0, where Mn and Mw are the number average molecular weight and the weight average molecular weight, respectively, of the polyamide resin composition measured by GPC.
[2] The polyamide resin composition according to [1], wherein the aliphatic polyamide resin (A) is an aliphatic homopolyamide.
[3] The polyamide resin composition according to [1] or [2], wherein the aliphatic polyamide resin (A) is at least one selected from the group consisting of polyamide 4, polyamide 6, polyamide 11, polyamide 12, polyamide 46, polyamide 410, polyamide 56, polyamide 66, polyamide 510, polyamide 512, polyamide 610, polyamide 612, polyamide 1010, and polyamide 1012.
[4] The polyamide resin composition according to any one of [1] to [3], wherein the number average molecular weight Mn of the polyamide resin composition is 35,000 to 46,000.
[5] The polyamide resin composition according to any one of [1] to [4], wherein a DSC curve obtained by heating the composition from 0°C to 280°C at a rate of 20°C/min in an air atmosphere shows a first melting peak temperature in a range of 70 to 120°C and a second melting peak temperature in a range of 150 to 260°C.
[6] The polyamide resin composition according to any one of [1] to [5], wherein the composition has a concentration of amino groups of 2.0 × 10⁻⁵ to 3.5 × 10⁻⁵ eq/g and a concentration of carboxyl groups of 4.5 × 10⁻⁵ to 6.0 × 10⁻⁵ eq/g.
[7] The polyamide resin composition according to any one of [1] to [6], wherein the copolymer (B) is an ethylene/propylene copolymer, an ethylene/1-butene copolymer, or an ethylene/1-hexene copolymer each having a group derived from maleic anhydride.
[8] The polyamide resin composition according to any one of [1] to [7], which is substantially free of silica.
[9] The polyamide resin composition according to any one of [1] to [8], wherein when the polyamide resin composition is extruded into a 40 µm thick unstretched film under conditions including cylinder temperatures in an extruder cylinder region divided into three sections of 190°C, 230°C, and 250°C, an adapter temperature of 250°C, a die temperature of 250°C, a screw rotational speed of 25 rpm, and a take-up speed of 3.0 m/min, the number of 50 to 99 µm gels in gel measurement of the unstretched film is 100 or less/0.04 m².
[10] A polyamide film comprising the polyamide resin composition described in any one of [1] to [9].
[11] A laminate film comprising three layers including a layer comprising the polyamide resin composition described in any one of [1] to [9], an adhesive layer, and a polyolefin layer stacked in the order named.
[12] A laminate film comprising five layers including an adhesive layer and a polyolefin layer stacked in the order named on each side of a layer comprising the polyamide resin composition described in any one of [1] to [9].
[13] The laminate film according to [11] or [12], wherein the layer comprising the polyamide resin composition is a biaxially stretched layer.
[14] The laminate film according to any one of [11] to [13], which is for food packaging.
[15] A pellet mixture comprising first pellets comprising a first aliphatic polyamide resin (A1) and an ethylene/C3-C8 α-olefin copolymer (B) having a functional group; and second pellets comprising a second aliphatic polyamide resin (A2), the pellet mixture being such that:
   100 mass% of the first pellets include 60 to 90 mass% of the first aliphatic polyamide resin (A1), 10 to 40 mass% of the ethylene/C3-C8 α-olefin copolymer (B) having a functional group, and 0 to 5 mass% of an additional component (C), the first pellets having an MFR of 1 to 40 g/10 min as measured at 230°C under a load of 2.16 kg in accordance with ASTM D1238,
   the second aliphatic polyamide resin (A2) has a relative viscosity of 2.5 to 5.0 as measured at 25°C with respect to a solution of 1 g of the polyamide resin in 100 ml of 96% sulfuric acid in accordance with JIS K 6920; a melting point of 150 to 260°C; and an MFR of 1 to 20 g/10 min as measured at 230°C under a load of 2.16 kg in accordance with ASTM D1238,
   the aliphatic polyamide resin (A1) and the aliphatic polyamide resin (A2) each have a ratio of the number of methylene groups to the number of amide groups of 3 or more and 11 or less, the copolymer (B) has a melting point of 70 to 120°C,
   melt-kneading of the pellet mixture gives a kneaded product including, based on 100 mass% of the kneaded product, 70 to 95 mass% of a total of the first aliphatic polyamide resin (A1) and the second aliphatic polyamide resin (A2), 5 to 30 mass% of the ethylene/C3-C8 α-olefin copolymer (B) having a functional group, and 0 to 5 mass% of the additional component (C), and
   the kneaded product has an Mn of 25,000 to 46,000 and an Mw/Mn of 1.5 to 3.0, where Mn and Mw are the number average molecular weight and the weight average molecular weight, respectively, of the kneaded product measured by GPC.
[16] The first pellets for use by being mixed with the second pellets in production of the pellet mixture described in [15].
[17] The second pellets for use by being mixed with the first pellets in production of the pellet mixture described in [15].

### Advantageous Effects of Invention

In the present invention, there can be provided a material-recyclable polyamide resin composition capable of giving a film that is free from appearance deterioration by film gels and excels in transparency, puncture strength, and pinhole resistance; and a film and a film laminate using the composition. Furthermore, there can be provided a pellet mixture suitably used to produce the polyamide resin composition, the film, and the film laminate.

### DESCRIPTION OF EMBODIMENTS

In the present specification, a plurality of substances may correspond to a single component in the composition. In such cases, the content of that component in the composition indicates the total amount of the substances unless otherwise specified. In the present specification, the term "polyamide resin composition" means a composition including at least a polyamide resin, and the composition may be in any form, for example, pellets, sheets, strands, chips, or products shaped by various methods. The term "pellets" indicates one of the forms that the polyamide resin composition can take. Hereinbelow, the polyamide resin composition and the pellets according to the present invention will be described in detail.

A polyamide resin composition of the present invention includes, based on 100 mass% of the polyamide resin composition, 70 to 95 mass% of an aliphatic polyamide resin (A), 5 to 30 mass% of an ethylene/C3-C8 α-olefin copolymer (B) having a functional group, and 0 to 5 mass% of an additional component (C). The aliphatic polyamide resin (A) has a ratio of the number of methylene groups to the number of amide groups of 3 or more and 11 or less. The polyamide resin composition has an Mn of 25,000 to 46,000 and an Mw/Mn of 1.5 to 3.0, where Mn and Mw are the number average molecular weight and the weight average molecular weight, respectively, of the polyamide resin composition measured by GPC. A film that is obtained using the polyamide resin composition of the present invention is free from appearance deterioration by film gels, excels in transparency, puncture strength, and pinhole resistance, and is also material-recyclable after the film is disposed of.

In the present invention, material-recyclable means that waste is reused as a raw material for products. Specifically, the term means that a laminate film that includes a layer containing a polyamide resin composition, in particular, a laminate film that includes at least a layer containing a polyamide resin composition and a layer containing a polyolefin, after being disposed of, is processed, for example, cut and pulverized, and is then melt-kneaded into a form, such as pellets, and is reused as a raw material for new plastic products.

### [Polyamide resin compositions]

### <Aliphatic polyamide resins (A)>

The aliphatic polyamide resin (A) contains an aliphatic group in a constituent repeating unit and has an amide bond (-CONH-) in the main chain.

Examples of the aliphatic polyamide resins (A) include aliphatic homopolyamides and aliphatic copolyamides. These may be used singly, or two or more may be used in combination.

### (Aliphatic homopolyamides)

The aliphatic homopolyamide is a polyamide resin composed of a single kind of structural unit derived from an aliphatic monomer. The aliphatic homopolyamide may be one composed of at least one of a single kind of a lactam and an aminocarboxylic acid that is a hydrolyzate of the lactam, or may be one composed of a combination of a single kind of a diamine and a single kind of a dicarboxylic acid. Here, the combination of a diamine and a dicarboxylic acid is understood such that a combination of a single kind of a diamine and a single kind of a dicarboxylic acid is regarded as a single monomer. In order to increase the elastic modulus, the aliphatic polyamide resin (A) is preferably an aliphatic homopolyamide.

Examples of the lactams include ε-caprolactam, enantholactam, undecanelactam, dodecanelactam (ω-laurolactam), α-pyrrolidone, and α-piperidone. Among these, one selected from the group consisting of ε-caprolactam, undecanelactam, and dodecanelactam is preferable from the point of view of polymerization productivity.

Examples of the aminocarboxylic acids include ε-aminocaproic acid, 7-aminoheptanoic acid, 9-aminononanoic acid, 11-aminoundecanoic acid, and 12-aminododecanoic acid.

Examples of the diamines include aliphatic diamines, such as ethylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, tridecanediamine, tetradecanediamine, pentadecanediamine, hexadecanediamine, heptadecanediamine, octadecanediamine, nonadecanediamine, eicosanediamine, 2-methyl-1,8-octanediamine, and 2,2,4/2,4,4-trimethylhexamethylenediamine.

Examples of the dicarboxylic acids include aliphatic dicarboxylic acids, such as oxalic acid, malonic acid, succinic acid, glutaric acid, adipic acid, pimelic acid, suberic acid, azelaic acid, sebacic acid, undecanedioic acid, dodecanedioic acid, tridecanedioic acid, tetradecanedioic acid, pentadecanedioic acid, hexadecanedioic acid, octadecanedioic acid, and eicosanedioic acid.

Specific examples of the aliphatic homopolyamides include polyamide 4, polyamide 6, polyamide 7, polyamide 9, polyamide 10, polyamide 11, polyamide 12, polyamide 26, polyamide 44, polyamide 45, polyamide 46, polyamide 48, polyamide 49, polyamide 54, polyamide 55, polyamide 56, polyamide 66, polyamide 410, polyamide 412, polyamide 58, polyamide 59, polyamide 510, polyamide 512, polyamide 64, polyamide 65, polyamide 68, polyamide 69, polyamide 610, polyamide 611, polyamide 612, polyamide 96, polyamide 98, polyamide 99, polyamide 105, polyamide 616, polyamide 618, polyamide 910, polyamide 912, polyamide 106, polyamide 108, polyamide 109, polyamide 1010, polyamide 1012, polyamide 125, polyamide 126, polyamide 129, polyamide 1210, polyamide 1212, and polyamide 122. These aliphatic homopolyamides may be used singly, or two or more may be used as a mixture. Among those described above, the aliphatic polyamide resin (A) is preferably at least one selected from the group consisting of polyamide 4, polyamide 6, polyamide 11, polyamide 12, polyamide 46, polyamide 410, polyamide 56, polyamide 66, polyamide 510, polyamide 512, polyamide 610, polyamide 612, polyamide 1010, and polyamide 1012 from the points of view of availability, economic efficiency, and the mechanical properties and the heat resistance of shaped articles that are obtained, and is more preferably at least one selected from the group consisting of polyamide 6 and polyamide 66.

### (Aliphatic copolyamides)

The aliphatic copolyamide is a polyamide resin composed of two or more kinds of structural units derived from aliphatic monomers. The structural units of the aliphatic copolyamide are derived from monomers selected from the group consisting of combinations of a diamine and a dicarboxylic acid, lactams, and aminocarboxylic acids. Here, the combination of a diamine and a dicarboxylic acid is understood such that a combination of a single kind of a diamine and a single kind of a dicarboxylic acid is regarded as a single monomer.

Examples of the diamines include those described as raw materials for the aliphatic homopolyamides.

Examples of the dicarboxylic acids include those described as raw materials for the aliphatic homopolyamides.

Examples of the lactams include those described as raw materials for the aliphatic homopolyamides. Examples of the aminocarboxylic acids include those described as raw materials for the aliphatic homopolyamides.

The diamines, the dicarboxylic acids, the lactams, and the aminocarboxylic acids each may be used singly, or two or more may be used in combination.

Specific examples of the aliphatic copolyamides include copolymers combining two or more kinds of monomers found in the polyamides illustrated above as exemplary aliphatic homopolyamides. More specific examples of the aliphatic copolyamides include polyamide 4/6, polyamide 6/66, polyamide 6/69, polyamide 6/610, polyamide 6/611, polyamide 6/612, polyamide 6/10, polyamide 6/11, polyamide 6/12, polyamide 6/66/12, polyamide 6/66/610, polyamide 6/66/612, polyamide 6/610/12, and polyamide 6/612/12. The aliphatic copolyamides may be used singly, or two or more may be used as a mixture.

Preferred aliphatic copolyamides are polyamide 6/66, polyamide 6/12, polyamide 6/66/12, polyamide 6/610/12, polyamide 6/612/12, and mixtures thereof. Polyamide 6/12 and/or polyamide 6/66/12, and mixtures thereof are more preferable.

These aliphatic copolyamides preferably contain C6 structural units in an amount of 50 mass% or more, more preferably 70 mass% or more, and still more preferably 75 mass% or more.

The aliphatic polyamide resin (A) may be produced using known polyamide production apparatuses, such as batch-type polymerization reactor single-tank or multi-tank continuous reaction devices, tubular continuous reaction devices, and kneading reaction extruders including single-screw kneading extruders and twin-screw kneading extruders. Polymerization may be performed by a known process, such as melt polymerization, solution polymerization, or solid-phase polymerization, while repeatedly changing, for example, the pressure to normal pressure, reduced pressure, or increased pressure. These polymerization processes may be used singly or may be combined appropriately.

### (Ratio of the number of methylene groups to the number of amide groups)

In the aliphatic polyamide resin (A), the ratio of the number of methylene groups ([CH₂]) to the number of amide groups ([NHCO]), [CH₂]/[NHCO] (hereinafter, the ratio of the number of methylene groups to the number of amide groups may be also written as [CH₂]/[NHCO]) is 3 or more and 11 or less. Controlling [CH₂]/[NHCO] to the above range makes it possible to enhance processability and to improve the mechanical properties and the heat resistance of shaped articles that are obtained. [CH₂]/[NHCO] is preferably 3 or more and 9 or less, more preferably 4 to 8, and still more preferably 4 to 7.

Examples of the aliphatic homopolyamides having a ratio [CH₂]/[NHCO] of the number of methylene groups to the number of amide groups of 3 or more and 11 or less include polyamide 4: 3.0, polyamide 6: 5.0, polyamide 7: 6.0, polyamide 9: 8.0, polyamide 10: 9.0, polyamide 11: 10.0, polyamide 12: 11.0, polyamide 26: 3.0, polyamide 44: 3.0, polyamide 45: 3.5, polyamide 46: 4.0, polyamide 48: 5.0, polyamide 49: 5.5, polyamide 410: 6.0, polyamide 412: 7.0, polyamide 54: 3.5, polyamide 55: 4.0, polyamide 56: 4.5, polyamide 58: 5.5, polyamide 59: 6.0, polyamide 510: 6.5, polyamide 512: 7.5, polyamide 64: 4.0, polyamide 65: 4.5, polyamide 66: 5.0, polyamide 68: 6.0, polyamide 69: 6.5, polyamide 610: 7.0, polyamide 611: 7.5, polyamide 612: 8.0, polyamide 616: 10.0, polyamide 618: 11.0, polyamide 96: 6.5, polyamide 98: 7.5, polyamide 99: 8.0, polyamide 910: 8.5, polyamide 912: 9.5, polyamide 105: 6.5, polyamide 106: 7.0, polyamide 108: 8.0, polyamide 109: 8.5, polyamide 1010: 9.0, polyamide 1012: 10.0, polyamide 125: 7.5, polyamide 126: 8.0, polyamide 129: 9.5, polyamide 1210: 10.0, and polyamide 1212: 11.0. Examples of the aliphatic copolyamides having a ratio [CH₂]/[NHCO] of the number of methylene groups to the number of amide groups of 3 or more and 11 or less include copolymers obtained using two or more raw material monomers forming the above aliphatic homopolyamides. These may be used singly, or two or more may be used in combination.

When the aliphatic polyamide resin (A) is a copolymer, the ratio [CH₂]/[NHCO] of the number of methylene groups to the number of amide groups may be determined by multiplying the ratio [CH₂]/[NHCO] of the number of methylene groups to the number of amide groups in a homopolymer of each monomer constituting the repeating units of the copolymer by the molar fraction of the constituent repeating units, and combining the products of all kinds of the constituent repeating units.

When the aliphatic polyamide resin (A) is a mixture of two or more kinds of aliphatic polyamide resins, the ratio [CH₂]/[NHCO] of the number of methylene groups to the number of amide groups may be determined by multiplying the ratio [CH₂]/[NHCO] of the number of methylene groups to the number of amide groups in each aliphatic polyamide resin by the molar mixing ratio, and combining the products of all kinds of the aliphatic polyamide resins.

In order to reduce film gels and to enhance transparency, puncture strength, and pinhole resistance of films, the aliphatic polyamide resin (A) is preferably at least one selected from the group consisting of polyamide 4, polyamide 6, polyamide 11, polyamide 12, polyamide 46, polyamide 410, polyamide 56, polyamide 66, polyamide 510, polyamide 512, polyamide 610, polyamide 612, polyamide 1010, polyamide 1012, polyamide 6/66, polyamide 6/12, and polyamide 6/66/12, more preferably at least one selected from the group consisting of polyamide 4, polyamide 6, polyamide 11, polyamide 12, polyamide 46, polyamide 410, polyamide 56, polyamide 66, polyamide 510, polyamide 512, polyamide 610, polyamide 612, polyamide 1010, and polyamide 1012, still more preferably at least one selected from the group consisting of polyamide 6 and polyamide 66, and particularly preferably polyamide 6.

### (Properties of the aliphatic polyamide resins (A))

From the point of view of processability, the relative viscosity of the aliphatic polyamide resin (A) is preferably 2.0 to 5.0, more preferably 2.0 to 4.5, and still more preferably 2.1 to 3.5. Controlling the relative viscosity of the aliphatic polyamide resin (A) to the above range will ensure film formability and the mechanical strength of films that are obtained.

The relative viscosity of the aliphatic polyamide resin (A) is a value measured at 25°C in accordance with JIS K 6920 with respect to a solution of 1 g of the polyamide resin (A) in 100 ml of 96% sulfuric acid. The relative viscosity is preferably measured as described above also when the aliphatic polyamide resin (A) is a combination of two or more kinds of resins. When, however, the relative viscosities and the mixing ratios of the respective polyamide resins are known, the relative viscosity of the aliphatic polyamide resin (A) may be determined by multiplying each of the relative viscosities by the mixing ratio and combining the products to give the average value.

In order to reduce film gels, the terminal amino group concentration in the aliphatic polyamide resin (A) is preferably 2.0 × 10⁻⁵ to 5.5 × 10⁻⁵ eq/g, more preferably 2.5 × 10⁻⁵ to 5.0 × 10⁻⁵ eq/g, and still more preferably 2.8 × 10⁻⁵ to 4.8 × 10⁻⁵ eq/g. The terminal amino group concentration may be expressed as the equivalent weight of amino groups per gram of the polymer and may be measured by titrating a solution of the polyamide resin in a phenol/methanol mixed solution with 1/50N hydrochloric acid.

The terminal amino group concentration in the polyamide resin is preferably measured by the above neutralization titration also when the aliphatic polyamide resin (A) includes two or more kinds of polyamide resin components having different terminal amino group concentrations. When, however, the terminal amino group concentrations and the mixing ratios of the respective polyamide resin components are known, the terminal amino group concentration in the polyamide resin may be determined by multiplying each of the terminal amino group concentrations by the mixing ratio and combining the products to give the average value.

In order to reduce film gels, the terminal carboxyl group concentration in the aliphatic polyamide resin (A) is preferably 2.0 × 10⁻⁵ to 5.5 × 10⁻⁵ eq/g, more preferably 2.5 × 10⁻⁵ to 5.0 × 10⁻⁵ eq/g, and still more preferably 2.8 × 10⁻⁵ to 4.8 × 10⁻⁵ eq/g. The terminal carboxyl group concentration may be expressed as the equivalent weight of carboxyl groups per gram of the polymer and may be measured by titrating a solution of the polyamide resin in benzyl alcohol with a 1/20N sodium hydroxide solution.

The terminal carboxyl group concentration in the polyamide resin is preferably measured by the above neutralization titration also when the aliphatic polyamide resin (A) includes two or more kinds of polyamide resin components having different terminal carboxyl group concentrations. When, however, the terminal carboxyl group concentrations and the mixing ratios of the respective polyamide resin components are known, the terminal carboxyl group concentration in the polyamide resin may be determined by multiplying each of the terminal carboxyl group concentrations by the mixing ratio and combining the products to give the average value.

In order to reduce film gels, the concentration difference between the terminal carboxyl groups and the terminal amino groups in the aliphatic polyamide resin (A) is preferably -3.0 × 10⁻⁵ to 3.0 × 10⁻⁵ eq/g, more preferably -2.0 × 10⁻⁵ to 2.0 × 10⁻⁵ eq/g, and still more preferably -1.0 × 10⁻⁵ to 1.0 × 10⁻⁵ eq/g.

From the point of view of mechanical properties, the number average molecular weight Mn of the aliphatic polyamide resin (A) measured by GPC is preferably 25,000 to 65,000, and the ratio Mw/Mn of the weight average molecular weight Mw to Mn is preferably 1.0 to 4.0. The number average molecular weight Mn is more preferably 30,000 to 65,000, still more preferably 33,000 to 63,000, and further preferably 35,000 to 60,000. The number average molecular weight Mn may also be 25,000 to 60,000. Furthermore, Mw/Mn is more preferably 1.0 to 3.0, and still more preferably 1.0 to 2.5. Mn and Mw are values measured by gel permeation chromatography (GPC).

From the point of view of processability, the melting point of the aliphatic polyamide resin (A) is preferably 150 to 260°C, more preferably 160 to 250°C, and still more preferably 180 to 240°C. The aliphatic polyamide resin (A) in an air atmosphere is heated to 280°C and is held at the temperature for 5 minutes, and the temperature is lowered to 0°C at a cooling rate of 20°C/min and is then increased from 0°C to 280°C at a rate of 20°C/min while recording a DSC curve. The melting peak temperature in the curve is taken as the melting point.

From the point of view of processability, the melt flow rate (MFR) of the aliphatic polyamide resin (A) measured at 230°C under a load of 2.16 kg in accordance with ASTM D1238 is preferably 1 to 100 g/10 min, more preferably 2 to 90 g/10 min, and still more preferably 3 to 80 g/10 min.

### (Content of the aliphatic polyamide resin (A))

The content of the aliphatic polyamide resin (A) is 70 to 95 mass% in the polyamide resin composition taken as 100 mass%. By controlling the content of the aliphatic polyamide resin (A) to the above range, good compatibility is obtained between the aliphatic polyamide resin (A) and the ethylene/C3-C8 α-olefin copolymer (B) having a functional group, and the polyamide resin composition attains enhanced melt stability and film formability. Furthermore, the above content ensures that polyamide films formed from the polyamide resin composition will have no or little deterioration in appearance stemming from film gels, and the films can maintain transparency and good pinhole resistance. Furthermore, the material-recyclability of waste of the films is also enhanced. The content of the aliphatic polyamide resin (A) is preferably 75 to 95 mass%, and more preferably 80 to 90 mass% based on 100 mass% of the polyamide resin composition.

### <Ethylene/C3-C8 α-olefin copolymers (B) having a functional group (hereinafter, also written as copolymers (B))>

The polyamide resin composition includes an ethylene/C3-C8 α-olefin copolymer (B) having a functional group. The incorporation of the copolymer (B) enhances the pinhole resistance of films formed from the polyamide resin composition in a low-temperature environment. Furthermore, the copolymer (B) has a functional group and functions as a compatibilizer for polyamides and polyolefins. This allows a laminate film that includes at least a layer containing the polyamide resin composition and a layer containing a polyolefin, after being disposed of, to be material-recycled in a way that the layers exhibit enhanced compatibility to give enhanced uniformity of the recycled plastic raw material. The copolymers (B) may be used singly, or two or more may be used in combination.

Examples of the functional groups in the copolymer (B) include carboxyl groups (which may be in the form of salts), acid anhydride groups, carboxylic acid ester groups, carboxylic acid imide groups, carboxylic acid amide groups, and epoxy groups. At least part of the functional groups will react with at least part of the amino groups in the aliphatic polyamide resin (A). From the point of view of the compatibility between polyamides and polyolefins, in particular, the functional groups are preferably at least one kind selected from the group consisting of carboxyl groups, carboxylic acid ester groups, and acid anhydride groups, and are more preferably acid anhydride groups.

For example, the functional groups may be introduced into the ethylene/C3-C8 α-olefin copolymer by (i) copolymerizing a copolymerizable monomer having a functional group during the polymerization of the copolymer, (ii) introducing the functional groups into the molecular chain or at molecular terminals of the ethylene/C3-C8 α-olefin copolymer using, for example, a polymerization initiator or a chain transfer agent, or (iii) grafting a compound having a functional group and a graftable functional group onto the ethylene/C3-C8 α-olefin copolymer. These introduction methods may be used singly or may be combined appropriately. In particular, the copolymer (B) is preferably produced by the method (ii) or (iii) in order to ensure that films formed from the polyamide resin composition will have no or little deterioration in appearance stemming from film gels and will maintain transparency and good pinhole resistance.

Examples of the copolymerizable monomers having a functional group and of the compounds having a functional group and a graftable functional group include acrylic acid, methacrylic acid, maleic acid, fumaric acid, itaconic acid, crotonic acid, mesaconic acid, citraconic acid, glutaconic acid, cis-4-cyclohexene-1,2-dicarboxylic acid, endobicyclo-[2.2.1]-5-heptene-2,3-dicarboxylic acid, metal salts of the above carboxylic acids, monomethyl maleate, monomethyl itaconate, methyl acrylate, ethyl acrylate, butyl acrylate, 2-ethylhexyl acrylate, hydroxyethyl acrylate, methyl methacrylate, 2-ethylhexyl methacrylate, hydroxyethyl methacrylate, aminoethyl methacrylate, dimethyl maleate, dimethyl itaconate, maleic anhydride, itaconic anhydride, citraconic anhydride, endobicyclo-[2.2.1]-5-heptene-2,3-dicarboxylic anhydride, maleimide, N-ethylmaleimide, N-butylmaleimide, N-phenylmaleimide, acrylamide, methacrylamide, glycidyl acrylate, glycidyl methacrylate, glycidyl ethacrylate, glycidyl itaconate, and glycidyl citraconate. These may be used singly, or two or more may be used in combination. Among those described above, maleic anhydride, itaconic anhydride, or citraconic anhydride is preferable, maleic anhydride or itaconic anhydride is more preferable, and maleic anhydride is particularly preferable.

From the points of view of the compatibility between polyamides and polyolefins and the reduction of film gels, the functional group concentration in the copolymer (B) is preferably 1.0 × 10⁻⁵ to 60 × 10⁻⁵ eq/g, more preferably 2.0 × 10⁻⁵ to 40 × 10⁻⁵ eq/g, and still more preferably 3.0 × 10⁻⁵ to 30 × 10⁻⁵ eq/g. When the functional groups are carboxyl groups, acid anhydride groups, or carboxylic acid ester groups, the functional group concentration in the copolymer (B) may be expressed as the equivalent weight of carboxyl groups per gram of the polymer and is measured by neutralization titration of a sample solution in a solvent, such as xylene, with a 0.1N KOH ethanol solution using an indicator, such as phenolphthalein.

When the copolymer (B) is a copolymer that has maleic anhydride-derived groups introduced by the method (ii) or (iii), the maleic anhydride modification ratio (the content (mass%) of the maleic anhydride-derived groups) is preferably 0.1 mass% to 3 mass%, more preferably 0.3 mass% to 2 mass%, and particularly preferably 0.5 mass% to 1.5 mass%. The above range of the maleic anhydride modification ratio enhances the compatibility between polyamides and polyolefins and can reduce film gels. For example, the maleic anhydride modification ratio may be measured by converting the equivalent weight of carboxyl groups obtained by the above-described neutralization titration into the maleic acid modification ratio, or by analyzing the copolymer by FT-IR and comparing the peak intensity at a wave number of 1780 cm⁻¹ assigned to the carbonyl groups, to a calibration curve that is prepared separately.

The copolymer (B) is an ethylene/C3-C8 α-olefin copolymer. In order to ensure that films formed from the polyamide resin composition will have no or little deterioration in appearance stemming from film gels and will maintain transparency and good pinhole resistance, the copolymer (B) is preferably free of a copolymerizable monomer having a functional group used as a comonomer component.

The number of carbon atoms in the α-olefin is 3 to 8, preferably 3 to 7, and more preferably 4 to 6. Specific examples of the C3-C8 α-olefins include 1-propene, 1-butene, 1-pentene, 1-hexene, 1-heptene, 1-octene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, and 3-ethyl-1-hexene. These may be used singly, or two or more may be used in combination. From the point of view of processability, in particular, 1-propene, 1-butene, 1-pentene, 1-hexene, 1-heptene, and 1-octene are preferable, 1-propene, 1-butene, and 1-hexene are more preferable, and 1-hexene is particularly preferable.

From the point of view of the compatibility between polyamides and polyolefins, the proportion of the C3-C8 α-olefin monomer in the copolymer (B), based on 100 mol% of the total of the ethylene monomer and the C3-C8 α-olefin monomer constituting the copolymer, is preferably 1 to 99 mol%, more preferably 5 to 95 mol%, and still more preferably 10 to 90 mol%.

The molecular structure of the copolymer (B) may be linear or branched with long or short side chains. As long as the advantageous effects of the present invention are not impaired, a polyene may be copolymerized to the copolymer (B), with examples including non-conjugated dienes and non-conjugated trienes, such as 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene (DMDT), dicyclopentadiene, cyclohexadiene, cyclooctadiene, 5-vinylnorbomene, 5-ethylidene-2-norbornene, 5-methylene-2-norbornene, 5-isopropylidene-2-norbornene, 6-chloromethyl-5-isopropenyl-2-norbornene, 2,3-diisopropylidene-5-norbornene, 2-ethylidene-3-isopropylidene-5-norbornene, and 2-propenyl-2,5-norbornadiene. These may be used singly, or two or more may be used in combination.

From the point of view of the compatibility between polyamides and polyolefins, in particular, the copolymer (B) is preferably an ethylene/C3-C8 α-olefin copolymer having groups derived from at least one selected from the group consisting of maleic anhydride and itaconic anhydride; more preferably an ethylene/propylene copolymer, an ethylene/l-butene copolymer, an ethylene/1-hexene copolymer, or an ethylene/l-octene copolymer each having groups derived from maleic anhydride; still more preferably an ethylene/propylene copolymer, an ethylene/1-butene copolymer, or an ethylene/1-hexene copolymer each having groups derived from maleic anhydride; further preferably an ethylene/1-butene copolymer or an ethylene/1-hexene copolymer each having groups derived from maleic anhydride; and particularly preferably an ethylene/1-hexene copolymer having groups derived from maleic anhydride.

From the point of view of processability, the melting point of the copolymer (B) is preferably 70 to 120°C, more preferably 75 to 120°C, and still more preferably 80 to 115°C. The copolymer (B) in an air atmosphere is heated to 280°C and is held at the temperature for 5 minutes, and the temperature is lowered to 0°C at a cooling rate of 20°C/min and is then increased from 0°C to 280°C at a rate of 20°C/min while recording a DSC curve. The melting peak temperature in the curve is taken as the melting point.

In order to reduce film gels, the melt flow rate (MFR) of the copolymer (B) measured at 230°C under a load of 2.16 kg in accordance with ASTM D1238 is preferably 1 to 100 g/10 min, more preferably 3 to 90 g/10 min, and still more preferably 5 to 70 g/10 min.

### (Content of the copolymer (B))

The content of the copolymer (B) is 5 to 30 mass% in the polyamide resin composition taken as 100 mass%. By controlling the content of the copolymer (B) to the above range, good compatibility is obtained between the aliphatic polyamide resin (A) and the copolymer (B), and the polyamide resin composition exhibits enhanced melt stability and film formability. Furthermore, the above content ensures that polyamide films formed from the polyamide resin composition will have no or little deterioration in appearance stemming from film gels, and the films can maintain transparency and exhibit enhanced pinhole resistance in a low-temperature environment. Furthermore, a laminate film that includes at least a layer containing the polyamide resin composition and a layer containing a polyolefin, after being disposed of, can be material-recycled in a way that the layers exhibit enhanced compatibility to give enhanced uniformity of the recycled plastic raw material. The content of the copolymer (B) is preferably 5 to 25 mass%, more preferably 5 to 20 mass%, and still more preferably 7 to 15 mass% based on 100 mass% of the polyamide resin composition. The content of the copolymer (B) may also be 10 to 20 mass%.

If the content of the copolymer (B) in 100 mass% of the polyamide resin composition is less than 5 mass%, films that are formed are not improved in pinhole resistance in a low-temperature environment and are deteriorated in material-recyclability. If the content is more than 30 mass%, the copolymer (B) exhibits low dispersibility in the polyamide resin composition and increases the occurrences of film gels to deteriorate the film appearance.

### <Additional components (C)>

The polyamide resin composition may also include an additional component (C) other than the components (A) and (B). Examples of such additional components include polyamide resins other than the components (A), for example, polyamide resins having alicyclic or aromatic groups in the main chain or side chains; thermoplastic resins other than the components (B); antioxidants, antiblocking agents, lubricants, nucleating agents, plasticizers, foaming agents, stabilizers, UV absorbers, weathering agents, antifogging agents, coloring agents. In particular, it is preferable that the polyamide resin composition include an antioxidant and/or a lubricant.

Even without containing an antiblocking agent, the polyamide resin composition exhibits antiblocking properties suited for film applications. From the points of view of economic efficiency and transparency, it is preferable that the polyamide resin composition be substantially free of an antiblocking agent. It is more preferable from the point of view of transparency that the polyamide resin composition be substantially free of silica.

Here, the phrase "substantially free of" means that the content of the antiblocking agent or silica in 100 mass% of the polyamide resin composition is less than 0.01 mass%, preferably less than 0.005 mass%, and more preferably less than 0.001 mass%.

In order to further improve the handleability of films that are formed, the polyamide resin composition may include an antiblocking agent. Examples of the antiblocking agents include minerals, such as diatomaceous earth, calcium carbonate, feldspars, and quartz, synthetic silica, and crosslinked resin beads. The antiblocking agents may be used singly, or two or more may be used in combination.

In order to further reduce the amount of film gels, the polyamide resin composition preferably includes an antioxidant. Examples of the antioxidants include organic antioxidants, such as phenolic compounds, phosphorus-containing compounds, and sulfur-containing compounds, and inorganic antioxidants, such as metal halide compounds. The antioxidants may be used singly, or two or more may be used in combination.

In order to, for example, improve the slide of pellets on one another before forming, improve the slide of pellets on a processing machine, and improve the slide of films on one another, the polyamide resin composition preferably includes a lubricant. Examples of the lubricants include terminal-modified products of polyalkylene glycols, phosphoric acid esters or phosphorus acid esters, higher fatty acid monoesters, higher fatty acids or metal salts thereof, carboxylic acid amides, low-molecular weight polyethylenes, magnesium silicate, substituted benzylidene sorbitol. These compounds may be used singly, or two or more may be used in combination.

The content of the additional component (C) in 100 mass% of the polyamide resin composition is 0 to 5 mass%, more preferably 0 to 3 mass%, still more preferably 0 to 2 mass%, further preferably 0 to 1 mass%, and particularly preferably 0.1 to 1 mass%.

### [Properties of the polyamide resin compositions]

According to GPC measurement, the polyamide resin composition has a number average molecular weight Mn of 25,000 to 46,000 and a ratio Mw/Mn of the weight average molecular weight Mw to Mn of 1.5 to 3.0. The present inventors have found that the control of Mn and Mw/Mn of the polyamide resin composition to the above ranges can significantly reduce the occurrence of film gels in polyamide films formed from the polyamide resin composition. The number average molecular weight Mn is more preferably 35,000 to 46,000, still more preferably 36,000 to 45,500, and further preferably 37,000 to 44,000. Furthermore, Mw/Mn is more preferably 1.5 to 2.8, and still more preferably 1.6 to 2.5. Mn and Mw are values measured by gel permeation chromatography (GPC).

When the polyamide resin composition in an air atmosphere is heated to 280°C and is held at the temperature for 5 minutes, and the temperature is lowered to 0°C at a cooling rate of 20°C/min and is then increased from 0°C to 280°C at a rate of 20°C/min while recording a DSC curve, it is preferable that the DSC curve show a first melting peak temperature in the range of 70 to 120°C and a second melting peak temperature in the range of 150 to 260°C. By virtue of having such melting peaks, the composition can give articles with enhanced strength. The first melting peak temperature corresponds to the melting point of the copolymer (B), and is preferably in the range of 74 to 120°C, and more preferably in the range of 78 to 113°C. The second melting peak temperature corresponds to the melting point of the aliphatic polyamide resin (A), and is preferably in the range of 160 to 250°C, and more preferably in the range of 180 to 240°C.

The amino group concentration in the polyamide resin composition is preferably 2.0 × 10⁻⁵ to 3.5 × 10⁻⁵ eq/g, more preferably 2.0 × 10⁻⁵ to 3.4 × 10⁻⁵ eq/g, and still more preferably 2.2 × 10⁻⁵ to 3.2 × 10⁻⁵ eq/g. By controlling the amino group concentration to the above range, the occurrence of film gels can be reduced. The amino group concentration may be expressed as the equivalent weight of amino groups per gram of the composition and may be measured by titrating a solution of the composition in a phenol/methanol mixed solution with 1/50N hydrochloric acid.

The carboxyl group concentration in the polyamide resin composition is preferably 4.5 × 10⁻⁵ to 6.0 × 10⁻⁵ eq/g, more preferably 4.5 × 10⁻⁵ to 5.8 × 10⁻⁵ eq/g, and still more preferably 4.6 × 10⁻⁵ to 5.6 × 10⁻⁵ eq/g. By controlling the carboxyl group concentration to the above range, the compatibility with polyolefins can be enhanced and the material-recyclability can be improved. The carboxyl group concentration may be expressed as the equivalent weight of carboxyl groups per gram of the composition and may be measured by titrating a solution of the composition in benzyl alcohol with a 1/20N sodium hydroxide solution.

The concentration difference between the carboxyl groups and the amino groups in the polyamide resin composition is preferably 1.0 × 10⁻⁵ to 4.0 × 10⁻⁵ eq/g, more preferably 1.0 × 10⁻⁵ to 3.5 × 10⁻⁵ eq/g, and still more preferably 1.2 × 10⁻⁵ to 3.0 × 10⁻⁵ eq/g. Furthermore, the concentration difference between the carboxyl groups and the amino groups in the polyamide resin composition may also be 1.1 × 10⁻⁵ to 3.8 × 10⁻⁵ eq/g or 1.4 × 10⁻⁵ to 3.4 × 10⁻⁵ eq/g. By controlling the concentration difference between the carboxyl groups and the amino groups to the above range, the occurrence of film gels can be reduced and the compatibility with polyolefins can be enhanced.

From the point of view of eliminating or reducing the deterioration in appearance stemming from film gels, it is preferable that when the polyamide resin composition is extruded into a 40 µm thick unstretched film under conditions including cylinder temperatures in an extruder cylinder region divided into three sections of 190°C, 230°C, and 250°C, an adapter temperature of 250°C, a die temperature of 250°C, a screw rotational speed of 25 rpm, and a take-up speed of 3.0 m/min, the number of 50 to 99 µm gels in gel measurement of the unstretched film be 100 or less/0.04 m², more preferably 80 or less/0.04 m², and still more preferably 70 or less/0.04 m². For example, the gel measurement may be performed using a fisheye counter (manufactured by FUTEC INC.).

### [Methods for producing the polyamide resin compositions]

The polyamide resin composition may be produced by any method without limitation. For example, the polyamide resin composition may be produced by the following production method 1 or 2.

### (Production method 1)

An aliphatic polyamide resin (A) and a copolymer (B) are melt-kneaded with a kneading machine to give a polyamide resin composition. An additional component (C) may be added to the polyamide resin composition. Examples of the kneading machines include single-screw or twin-screw extruders, Banbury mixers, kneaders, and mixing rolls. For example, all the ingredients may be added and then melt-kneaded using a twin-screw extruder. Alternatively, some of the ingredients may be added and then melt-kneaded while mixing the rest of the ingredients using a side feeder. Any of these and other methods may be adopted. Processing the polyamide resin composition into pellets beforehand is beneficial to ensure the stability of film production and the dispersibility of the components in the polyamide resin composition when the composition is melted and formed into films using a film forming machine or the like.

### (Production method 2)

A first aliphatic polyamide resin (A1) and a copolymer (B) are melt-kneaded beforehand using a kneading machine to give a melt-kneaded product (D). Separately, a second aliphatic polyamide resin (A2) is provided. An additional component (C) may be added to each of the melt-kneaded product (D) and the second aliphatic polyamide resin (A2).

The melt-kneaded product (D) and the second aliphatic polyamide resin (A2) may be each formed into pellets, and the pellets and, if necessary, an additional component (C) may be uniformly dry blended in predetermined proportions using, for example, a tumbler, a mixer, or the like to give a pellet mixture. The pellet mixture may be melt-kneaded with a kneading machine to give a polyamide resin composition. The kneading machine may be one described in the production method 1.

In particular, the polyamide resin composition is preferably produced by melt-kneading the above pellet mixture with a single-screw extruder. The dispersibility of the copolymer (B) in the polyamide resin composition is enhanced by obtaining the composition in such a manner that the copolymer (B) and the first aliphatic polyamide resin (A1) are melt-kneaded beforehand to give the melt-kneaded product (D), which is then processed into pellets and dry blended with pellets of the second aliphatic polyamide resin (A2), and the resultant pellet mixture is melt-kneaded. The enhanced dispersibility of the copolymer (B) probably contributes to enhancements in film formability and in the pinhole resistance of films in a low-temperature environment, and also to reducing the occurrence of film gels.

In each of the aliphatic polyamide resin (A1) and the aliphatic polyamide resin (A2), the ratio of the number of methylene groups to the number of amide groups is 3 or more and 11 or less. The first aliphatic polyamide resin (A1) and the second aliphatic polyamide resin (A2) may be the polyamide resins described hereinabove as the aliphatic polyamide resins (A). The first aliphatic polyamide resin (A1) and the second aliphatic polyamide resin (A2) may be the same as or different from each other. The first aliphatic polyamide resin (A1) and the second aliphatic polyamide resin (A2) are preferably each an aliphatic homopolyamide. The first aliphatic polyamide resin (A1) and the second aliphatic polyamide resin (A2) are more preferably each at least one selected from the group consisting of polyamide 4, polyamide 6, polyamide 7, polyamide 9, polyamide 10, polyamide 11, polyamide 12, polyamide 26, polyamide 44, polyamide 45, polyamide 46, polyamide 48, polyamide 49, polyamide 410, polyamide 412, polyamide 54, polyamide 55, polyamide 56, polyamide 58, polyamide 59, polyamide 66, polyamide 510, polyamide 512, polyamide 64, polyamide 65, polyamide 68, polyamide 69, polyamide 610, polyamide 611, polyamide 612, polyamide 96, polyamide 98, polyamide 99, polyamide 105, polyamide 616, polyamide 618, polyamide 910, polyamide 912, polyamide 106, polyamide 108, polyamide 109, polyamide 1010, polyamide 1012, polyamide 125, polyamide 126, polyamide 129, polyamide 1210, polyamide 1212, polyamide 122, polyamide 4/6, polyamide 6/66, polyamide 6/69, polyamide 6/610, polyamide 6/611, polyamide 6/612, polyamide 6/10, polyamide 6/11, polyamide 6/12, polyamide 6/66/12, polyamide 6/66/610, polyamide 6/66/612, polyamide 6/610/12, and polyamide 6/612/12; still more preferably each at least one selected from the group consisting of polyamide 4, polyamide 6, polyamide 11, polyamide 12, polyamide 46, polyamide 410, polyamide 56, polyamide 66, polyamide 510, polyamide 512, polyamide 610, polyamide 612, polyamide 1010, and polyamide 1012; further preferably each at least one selected from the group consisting of polyamide 6 and polyamide 66; and particularly preferably each polyamide 6. Furthermore, polyamide 6/66 may be used as the first aliphatic polyamide resin (A1) and the second aliphatic polyamide resin (A2). The first aliphatic polyamide resin (A1) and the second aliphatic polyamide resin (A2) may be each a single resin or a combination of two or more kinds of resins.

### [Pellet mixtures]

When the polyamide resin composition is produced by the production method 2, it is preferable to use a pellet mixture that includes first pellets including a first aliphatic polyamide resin (A1) and an ethylene/C3-C8 α-olefin copolymer (B) having a functional group (hereinafter, also written as the copolymer (B)); and second pellets including a second aliphatic polyamide resin (A2). The second pellets are dissimilar to the first pellets. That is, the first pellets and the second pellets are composed of different polyamide resin compositions. The second pellets may contain less than 1.0 mass% of the copolymer (B) in 100 mass% of the second pellets, and preferably do not contain the copolymer (B). The first pellets and the second pellets may be each a single kind of pellets or a combination of two or more kinds of pellets.

The first pellets and the second pellets may each contain additional components (C), such as an antioxidant and a lubricant. Furthermore, the pellet mixture may contain additional components (C), such as an antioxidant and a lubricant, in addition to the first pellets and the second pellets.

The first aliphatic polyamide resin (A1) and the second aliphatic polyamide resin (A2) may be the polyamide resins described hereinabove as the aliphatic polyamide resins (A), and preferred types of the resins are also similar. The first aliphatic polyamide resin (A1) and the second aliphatic polyamide resin (A2) may be the same as or different from each other.

### (First pellets)

From the point of view of melt stability during melt-kneading in the production of the first pellets, the content of the first aliphatic polyamide resin (A1) is preferably 60 to 90 mass% based on 100 mass% of the first pellets. From the point of view of film gel reduction, the content of the first aliphatic polyamide resin (A1) is more preferably 65 mass% or more, and still more preferably 70 mass% or more based on 100 mass% of the first pellets. From the point of view of enhancing mechanical properties, the content of the first aliphatic polyamide resin (A1) is more preferably 88 mass% or less, still more preferably 85 mass% or less, and particularly preferably 80 mass% or less based on 100 mass% of the first pellets.

The copolymer (B) and preferred embodiments thereof are as described hereinabove. From the point of view of processability, the melting point of the copolymer (B) is preferably 70 to 120°C, more preferably 75 to 120°C, and still more preferably 80 to 115°C. The copolymer (B) in an air atmosphere is heated to 280°C and is held at the temperature for 5 minutes, and the temperature is lowered to 0°C at a cooling rate of 20°C/min and is then increased from 0°C to 280°C at a rate of 20°C/min while recording a DSC curve. The melting peak temperature in the curve is taken as the melting point.

From the points of view of pinhole resistance and the material-recyclability of film waste, the content of the copolymer (B) is preferably 10 to 40 mass% based on 100 mass% of the first pellets. From the points of view of pinhole resistance and the material-recyclability of film waste, the content of the copolymer (B) is more preferably 12 mass% or more, still more preferably 15 mass% or more, and particularly preferably 20 mass% or more. From the points of view of film transparency and film gels, the content of the copolymer (B) is more preferably 35 mass% or less, and still more preferably 32 mass% or less based on 100 mass% of the first pellets. The content of the copolymer (B) may also be 30 mass% or less based on 100 mass% of the first pellets.

From the point of view of processability, the content of the additional component (C) is preferably 0 to 5 mass% based on 100 mass% of the first pellets. The content of the additional component (C) is more preferably 3 mass% or less, and still more preferably 1 mass% or less. The content of the additional component (C) is more preferably 0.1 mass% or more, and still more preferably 0.2 mass% or more based on 100 mass% of the first pellets.

From the point of view of film formability, the MFR of the first pellets measured at 230°C under a load of 2.16 kg in accordance with ASTM D1238 is preferably 1 to 40 g/10 min. The MFR of the first pellets is more preferably 2 g/10 min or more, still more preferably 3 g/10 min or more, and particularly preferably 4 g/10 min or more. The MFR of the first pellets is more preferably 35 g/10 min or less, and still more preferably 30 g/10 min or less.

From the point of view of the pinhole resistance of polyamide films in a low-temperature environment, the content of the first pellets is preferably 10 mass% or more, more preferably 15 mass% or more, and still more preferably 20 mass% or more based on 100 mass% of the pellet mixture. From the point of view of the dispersibility of the components in the polyamide resin composition, the content of the first pellets is preferably 97 mass% or less, more preferably 90 mass% or less, still more preferably 80 mass% or less, and particularly preferably 70 mass% or less based on 100 mass% of the pellet mixture.

### (Second pellets)

The second pellets include the second aliphatic polyamide resin (A2). The content of the second aliphatic polyamide resin (A2) is preferably 95 to 100 mass%, more preferably 97 to 100 mass%, and still more preferably 99 to 100 mass% based on 100 mass% of the second pellets.

The second pellets may contain less than 1.0 mass% of the copolymer (B) based on 100 mass% of the second pellets. In a preferred embodiment, the second pellets do not contain the copolymer (B).

From the point of view of processability, the content of the additional component (C) is preferably 5 mass% or less, more preferably 0 to 3 mass%, and still more preferably 0 to 1 mass% based on 100 mass% of the second pellets. The second pellets preferably include an antioxidant and/or a lubricant as the additional component(s) (C).

The second aliphatic polyamide resin (A2) preferably has a relative viscosity of 2.5 to 5.0 as measured at 25°C with respect to a solution of 1 g of the polyamide resin in 100 ml of 96% sulfuric acid in accordance with JIS K 6920. By controlling the relative viscosity of the second aliphatic polyamide resin (A2) to the above range, film processability can be enhanced. The relative viscosity of the second aliphatic polyamide resin (A2) is more preferably 2.8 or more, and still more preferably 2.9 or more. The relative viscosity of the second aliphatic polyamide resin (A2) is more preferably 4.5 or less, and still more preferably 4.1 or less.

The relative viscosity is preferably measured as described above also when the second aliphatic polyamide resin (A2) is a combination of two or more kinds of resins. When, however, the relative viscosities and the mixing ratios of the respective polyamide resins are known, the relative viscosity of the second aliphatic polyamide resin (A2) may be determined by multiplying each of the relative viscosities by the mixing ratio and combining the products to give the average value.

From the point of view of processability, the melting point of the second aliphatic polyamide resin (A2) is preferably 150 to 260°C, more preferably 160 to 250°C, and still more preferably 180 to 240°C. The second aliphatic polyamide resin (A2) in an air atmosphere is heated to 280°C and is held at the temperature for 5 minutes, and the temperature is lowered to 0°C at a cooling rate of 20°C/min and is then increased from 0°C to 280°C at a rate of 20°C/min while recording a DSC curve. The melting peak temperature in the curve is taken as the melting point.

From the point of view of film processability, the MFR of the second aliphatic polyamide resin (A2) measured at 230°C under a load of 2.16 kg in accordance with ASTM D1238 is preferably 1 to 20 g/10 min, more preferably 1 to 18 g/10 min, and still more preferably 2 to 15 g/10 min.

From the point of view of film gel reduction, the terminal amino group concentration in the second aliphatic polyamide resin (A2) is preferably 2.0 × 10⁻⁵ to 5.5 × 10⁻⁵ eq/g, more preferably 2.5 × 10⁻⁵ to 5.0 × 10⁻⁵ eq/g, and still more preferably 2.8 × 10⁻⁵ to 4.8 × 10⁻⁵ eq/g. The terminal amino group concentration may be measured as described for the aliphatic polyamide resin (A).

From the point of view of film gel reduction, the terminal carboxyl group concentration in the second aliphatic polyamide resin (A2) is preferably 2.0 × 10⁻⁵ to 5.5 × 10⁻⁵ eq/g, more preferably 2.5 × 10⁻⁵ to 5.0 × 10⁻⁵ eq/g, and still more preferably 2.8 × 10⁻⁵ to 4.8 × 10⁻⁵ eq/g. The terminal carboxyl group concentration may be measured as described for the aliphatic polyamide resin (A).

From the point of view of film gel reduction, the concentration difference between the terminal carboxyl groups and the terminal amino groups in the second aliphatic polyamide resin (A2) is preferably -3.0 × 10⁻⁵ to 3.0 × 10⁻⁵ eq/g, more preferably -2.0 × 10⁻⁵ to 2.0 × 10⁻⁵ eq/g, and still more preferably -1.0 × 10⁻⁵ to 1.0 × 10⁻⁵ eq/g.

From the point of view of enhancing mechanical properties, the number average molecular weight Mn of the second aliphatic polyamide resin (A2) measured by GPC is preferably 25,000 to 65,000, and the ratio Mw/Mn of the weight average molecular weight Mw to Mn is preferably 1.0 to 4.0. The number average molecular weight Mn is more preferably 30,000 to 65,000, still more preferably 33,000 to 63,000, and further preferably 35,000 to 60,000. The number average molecular weight Mn may also be 25,000 to 60,000. Furthermore, Mw/Mn is more preferably 1.0 to 3.0, and still more preferably 1.0 to 2.5. Mn and Mw are values measured by gel permeation chromatography (GPC).

From the point of view of the transparency of films, the content of the second pellets is preferably 3 mass% or more, more preferably 10 mass% or more, still more preferably 20 mass% or more, and particularly preferably 30 mass% or more based on 100 mass% of the pellet mixture. From the point of view of pinhole resistance, the content of the second pellets is preferably 90 mass% or less, more preferably 85 mass% or less, and still more preferably 80 mass% or less based on 100 mass% of the pellet mixture.

### (Pellet mixtures)

The total content of the first aliphatic polyamide resin (A1) and the second aliphatic polyamide resin (A2) is preferably 70 to 95 mass%, more preferably 75 to 95 mass%, and still more preferably 80 to 90 mass% based on 100 mass% of a kneaded product obtained by melt-kneading the pellet mixture. By controlling the total content of the first aliphatic polyamide resin (A1) and the second aliphatic polyamide resin (A2) to the above range, good compatibility is obtained between the aliphatic polyamide resin (A) and the copolymer (B), and the polyamide resin composition exhibits enhanced melt stability and film formability. Furthermore, the above total content ensures that polyamide films formed from the polyamide resin composition will have no or little deterioration in appearance stemming from film gels, and the films can maintain transparency and good pinhole resistance. Furthermore, the material-recyclability of waste of the films is also enhanced.

The content of the copolymer (B) is preferably 5 to 30 mass%, more preferably 5 to 25 mass%, still more preferably 5 to 20 mass%, and particularly preferably 10 to 20 mass% based on 100 mass% of a kneaded product obtained by melt-kneading the pellet mixture. By controlling the content of the copolymer (B) to the above range, good compatibility is obtained between the aliphatic polyamide resin (A) and the copolymer (B), and the polyamide resin composition exhibits enhanced melt stability and film formability. Furthermore, the above content ensures that polyamide films formed from the polyamide resin composition will have no or little deterioration in appearance stemming from film gels, and the films can maintain transparency and exhibit enhanced pinhole resistance in a low-temperature environment. Furthermore, a laminate film that includes at least a layer containing the polyamide resin composition and a layer containing a polyolefin, after being disposed of, can be material-recycled in a way that the layers exhibit enhanced compatibility to give enhanced uniformity of the recycled plastic raw material.

From the point of view of processability, the content of the additional component (C) is preferably 0 to 5 mass%, more preferably 0 to 3 mass%, still more preferably 0 to 2 mass%, further preferably 0 to 1 mass%, and particularly preferably 0.1 to 1 mass% based on 100 mass% of a kneaded product obtained by melt-kneading the pellet mixture.

From the point of view of film gel reduction, the number average molecular weight Mn, measured by GPC, of a kneaded product obtained by melt-kneading the pellet mixture is 25,000 to 46,000, and the ratio Mw/Mn of the weight average molecular weight Mw to Mn is 1.5 to 3.0. The number average molecular weight Mn is more preferably 35,000 to 46,000, still more preferably 36,000 to 45,500, and further preferably 37,000 to 44,000. Furthermore, Mw/Mn is more preferably 1.5 to 2.8, and still more preferably 1.6 to 2.5. Mn and Mw are values measured by gel permeation chromatography (GPC).

Melt-kneading of the pellet mixture gives a polyamide resin composition. The polyamide resin composition thus obtained has the preferred ranges described hereinabove of the first melting peak temperature, the second melting peak temperature, the amino group concentration, the carboxyl group concentration, the concentration difference between the carboxyl groups and the amino groups, the MFR measured at 230°C under a load of 2.16 kg in accordance with ASTM D1238, and the gel count in an unstretched film obtained by extrusion.

Another aspect of the present invention resides in the first pellets for use by being mixed with the second pellets in the production of the pellet mixture. Another aspect of the present invention resides in the second pellets for use by being mixed with the first pellets in the production of the pellet mixture.

### (Production of pellets)

For example, pellets can be obtained by extruding the polyamide resin composition into a strand from an extruder or the like, and cutting the strand with a cutter having a rotating blade.

For example, the shape of the pellets may be spherical, rectangular, spheroidal, slightly deformed from a true spheroid, or columnar with a circular or elliptical cross section. In particular, the shape of the pellets is preferably spherical, spheroidal, or columnar with a circular or elliptical cross section.

When the pellets have an elliptical cross section, the major axis is preferably 1 to 5 mm, more preferably 2 to 4 mm, and still more preferably 2.0 to 3.5 mm. Furthermore, the minor axis of the pellets with an elliptical cross section is preferably 1 to 3 mm, and more preferably 2 to 3 mm. The ratio of the major axis to the minor axis (major axis/minor axis) is not particularly limited but is preferably 1 to 4.

The major axis and the minor axis of the pellets may be controlled by, for example, adjusting the diameter of the nozzle of the extruder or the like and changing the diameter of the strand.

The length of the pellets is not particularly limited but is preferably 2 to 4 mm, and more preferably 2.5 to 4.0 mm or less.

### [Polyamide films]

A polyamide film includes the polyamide resin composition. The polyamide film may be an unstretched polyamide film or may be a stretched polyamide film obtained by stretching the unstretched polyamide film. From the point of view of mechanical strength, a stretched polyamide film is preferable.

The polyamide film may be produced by any method without limitation. For example, a known production method may be applied. For example, the polyamide resin composition obtained by the production method 1 described hereinabove may be melt-kneaded with an extruder, extruded into a film using a die, such as a T-die or a coat-hanger die, cast onto a casting roll surface, and then cooled to give a polyamide film.

Alternatively, the melt-kneaded product (D) or the first pellets, the aliphatic polyamide resin (A2) or the second pellets, and optional additional components may be melt-kneaded using an extruder in accordance with the production method 2 described hereinabove, and the kneaded product may be treated similarly as described above to give a polyamide film. Still alternatively, the pellet mixture may be melt-kneaded with an extruder or the like, and the kneaded product may be treated similarly as described above to give a polyamide film.

The polyamide film produced may be stretched to give a stretched film. In this case, the produced polyamide film may be uniaxially stretched to give a uniaxially stretched film or may be biaxially stretched (simultaneously biaxially stretched or sequentially biaxially stretched) to give a biaxially stretched film.

The stretching method is not particularly limited. Examples include uniaxial stretching with heating rolls, simultaneous biaxial stretching by a tubular method, and sequential biaxial stretching with heating rolls and a tenter. The temperature of the heating rolls is not particularly limited and may be in the range of 35°C to 130°C, and can be selected appropriately in accordance with the quality of the polyamide film and the desired stretching ratios. The stretching ratios include a stretching ratio in the film extrusion direction (MD) and a stretching ratio in the direction (TD) perpendicular to the film extrusion direction. The stretching ratio in the film extrusion direction is not particularly limited but is preferably 2 times or more, more preferably 2 to 6 times, and particularly preferably 2.5 to 5 times. The stretching ratio in the direction perpendicular to the film extrusion direction is not particularly limited but is preferably 2 times or more, more preferably 2 to 6 times, and particularly preferably 2.5 to 5 times. The stretching ratios may be adjusted depending on the purpose.

The thickness of the film is not particularly limited and may be selected appropriately in accordance with factors, such as purpose. In the case of a monolayer polyamide film, for example, the thickness may be 10 µm to 300 µm when the film is an unstretched film and may be 5 µm to 100 µm when the film is a stretched film.

The polyamide film exhibits excellent pinhole resistance. Specifically, an unstretched polyamide film is flexed 1000 times at 5°C in accordance with MIL-B-131C using Gelvo type Flex-Cracking Tester (manufactured by TESTER SANGYO CO,. LTD.); the film is then placed onto a recording paper; India ink is spread; and the number of black spots recorded on the recording paper is counted to evaluate the pinhole resistance. The number of the black spots counted is preferably 100 or less/0.03 m², more preferably 80 or less/0.03 m², and still more preferably 70 or less/0.03 m².

Furthermore, the polyamide film is characteristically free from deterioration in appearance stemming from film gels. Specifically, the number of film gels may be evaluated using a fisheye counter manufactured by FUTEC INC. Specifically, the polyamide resin composition is extruded into a 40 µm thick unstretched film under conditions including cylinder temperatures in an extruder cylinder region divided into three sections of 190°C, 230°C, and 250°C, an adapter temperature of 250°C, a die temperature of 250°C, a screw rotational speed of 25 rpm, and a take-up speed of 3.0 m/min, and the number of film gels with a diameter of 50 µm or more per 0.04 m² of the unstretched film is measured online using the fisheye counter. The number of 50 to 99 µm gels thus measured is preferably 100 or less/0.04 m², more preferably 80 or less/0.04 m², and still more preferably 70 or less/0.04 m².

The haze ratio of the polyamide film is preferably 25% or less, more preferably 15% or less, and still more preferably 10% or less. Here, the haze ratio of the polyamide film is measured in accordance with ASTM D-1003.

The gloss value of the polyamide film is preferably 50% or more, more preferably 80% or more, and still more preferably 100% or more. Here, the gloss value of the polyamide film is measured in accordance with ASTM D-523.

### [Laminate films]

A laminate film includes at least one layer containing the polyamide resin composition (also referred to as a polyamide film layer). For example, the laminate film may be produced by a method including a step of stacking an additional layer onto one or both sides of the polyamide film. The stacking method is not particularly limited, with examples including the coextrusion method, the extrusion lamination method, and the dry lamination method described in JP 2011-225870 A. The coextrusion method is preferable from the point of view of economic efficiency. The laminate film produced may be stretched to give a stretched laminate film. In this case, the produced laminate film may be uniaxially stretched to give a uniaxially stretched film laminate or may be biaxially stretched (simultaneously biaxially stretched or sequentially biaxially stretched) to give a biaxially stretched film laminate. The stretching method and the stretching ratios are as described in the section of the polyamide films.

### (Blown-film extrusion)

The laminate film may be produced by such a forming method as air-cooled blown-film extrusion or water-cooled blown-film extrusion. Among these methods, air-cooled blown-film extrusion involves simple equipment and offers good workability because the width of the film can be easily changed by simply controlling the blow-up ratio, thus allowing for good film productivity.

While the film may be formed by air-cooled blown-film extrusion under any conditions without limitation, the forming temperature is preferably equal to or higher than the melting point of the raw material resins that are used, and below 300°C. For example, the forming temperature may be 230°C to 260°C. The blow-up ratio indicates the ratio of the maximum bubble diameter to the die diameter. The blow-up ratio is preferably 1.1 to 3.0, and more preferably 1.2 to 2.5. The take-up speed is determined depending on the thickness, the width, and the throughput of the film, and may be controlled within a range where stable film production can be maintained. Generally, the take-up speed is preferably 1 to 150 m/min, and more preferably 5 to 100 m/min.

### (Additional layers)

The additional layers are not particularly limited as long as the laminate film exhibits the effects of the polyamide film, and may be, for example, a polyolefin layer and an adhesive layer. Here, the adhesive layer is selected appropriately for the purposes of enhancing the adhesion between the polyamide film layer according to the present invention and the polyolefin layer, and enhancing formability. It should be noted that the polyamide film layer according to the present invention is not a polyolefin layer or an adhesive layer.

The polyolefin layer and the adhesive layer may contain an additive. The additives used here may be those described as the additional components (C).

Examples of the polyolefins for forming the polyolefin layers include nonpolar polyolefins, such as low-density polyethylene, linear low-density polyethylene, high-density polyethylene, ethylene/C3 or higher α-olefin copolymers, propylene homopolymer, and propylene/C4 or higher α-olefin copolymers; ethylene/acrylic acid copolymer, ethylene/vinyl acetate copolymer, ethylene/acrylate copolymers, and ethylene/methacrylic acid copolymers. Among these, from the point of view of food packaging applications, nonpolar polyolefins and ethylene/vinyl acetate copolymer are preferable, and, in particular, linear low-density polyethylene is more preferable. When the polyolefin layer is a nonpolar polyolefin layer, the laminate film tends to be further enhanced in vapor barrier properties. When the polyolefin layer is an ethylene/vinyl acetate copolymer layer, the oxygen gas permeability of the laminate film tends to be further lowered. A laminate film that includes at least the polyamide film layer and a polyolefin layer can be suitably used for food packaging and also excels in material-recyclability after being disposed of.

The adhesive layer is composed of an adhesive resin or an adhesive. Examples of the adhesive resins include acid-modified polyolefin resins, such as polyethylenes acid-modified by grafting of at least one monomer selected from unsaturated carboxylic acids and derivatives thereof, with examples including maleic acid-modified polyethylene; ionomers, ethylene/acrylic acid copolymer, and ethylene/methacrylic acid copolymer. For example, the adhesives may be solvent-based adhesives or solventless adhesives, and may be one-part adhesives or two-part adhesives. Examples of the adhesives include epoxy adhesives and urethane adhesives, with urethane adhesives being preferable. Examples of the urethane adhesives include aromatic ether adhesives, aliphatic ester adhesives, and aromatic ester adhesives.

### (Configurations of layers)

Specific examples of the configurations of layers constituting the laminate films include two layers including the polyamide film layer and a polyolefin layer; three layers including the polyamide film layer, an adhesive layer, and a polyolefin layer; at least three or more layers including the polyamide film layer, a polyolefin layer, and one or more additional layers selected from the group consisting of the polyamide film layers, adhesive layers, and polyolefin layers; and at least four or more layers including the polyamide film layer, a polyolefin layer, an adhesive layer, and one or more additional layers selected from the group consisting of the polyamide film layers, adhesive layers, and polyolefin layers. From the point of view of food packaging applications, in particular, the laminate film preferably includes at least three layers including a layer containing the polyamide resin composition, an adhesive layer, and a polyolefin layer stacked in the order named, or the laminate film preferably includes at least five layers including an adhesive layer and a polyolefin layer stacked in the order named on each side of a layer containing the polyamide resin composition. When the laminate film is an unstretched laminate film and is a deep-drawing packaging film, it is preferable that the laminate film have a polyolefin layer as the inner layer. In the laminate film here, the layer that will be in contact with the outside air is the outer layer, and the layer that will be in contact with food to be packaged is the inner layer. The layer containing the polyamide resin composition may be a biaxially stretched layer.

### (Thickness)

The thickness of the laminate film is not particularly limited and may be selected in accordance with the use application. The thickness of each polyamide film layer in the laminate film may be 1 to 300 µm, preferably 2 to 100 µm, and more preferably 5 to 80 µm. The thickness of each polyolefin layer may be selected appropriately in accordance with the purpose and is preferably, for example, in the range of 8 to 120 µm. The thickness of each adhesive layer may be selected in accordance with the purpose and is preferably, for example, in the range of 1 to 100 µm. The total thickness of the laminate film is not particularly limited, and is preferably 5 to 500 µm, more preferably 20 to 300 µm, and particularly preferably 50 to 200 µm.

### [Applications]

The polyamide resin composition and the pellet mixture may be used as raw materials for various shaped articles. Shaped articles including the polyamide resin composition may be used in wide applications including packaging films, such as food packaging films, automobile members, computers and related equipment, optical equipment members, electric and electronic equipment, information and communication equipment, precision equipment, civil engineering and construction supplies, medical supplies, and household goods, and are suited as packaging films, and particularly useful as food packaging films.

The polyamide films and the laminate films are free from deterioration in appearance stemming from film gels and have excellent pinhole resistance in a low-temperature environment. Thus, the polyamide films and the laminate films may be suitably used for the packaging of items, in particularly, for the packaging of food.

The polyamide films that are unstretched and the laminate films that are unstretched have excellent deep drawability and thus may be suitably used as food packaging films, in particular, deep-drawing food packaging films. When the unstretched polyamide film is used as a deep-drawing packaging film, the film is deep-drawn into a deep-drawn lower package, to which food is placed, and the package is closed with a lid material. Examples of the foods accommodated in the deep-drawn lower packages include sliced foods, such as ham and cheese. The lid material is not particularly limited and may be selected appropriately in accordance with the purpose.

The polyamide films that are stretched and the laminate films that are stretched excel in mechanical strength and oxygen barrier properties, and are therefore useful in food packaging film applications where foods, for example, semisolid foods, such as sausages (pastes), and solid foods, such as processed meat and ham, are packaged by filling.

In particular, a laminate film that includes at least a layer containing the polyamide resin composition and a polyolefin layer, and a laminate film that includes a layer containing the polyamide resin composition, an adhesive layer, and a polyolefin layer stacked in the order named are useful because such laminate films can be suitably used for food packaging and also excel in material-recyclability after being disposed of.

### EXAMPLES

Hereinbelow, the present invention will be described in greater detail by way of Examples and Comparative Examples. However, the present invention is not limited to those Examples and can be modified appropriately without departing from the gist thereof.

### [Measurement of properties of raw materials, first and second pellets, and polyamide resin compositions]

The following properties were evaluated for raw materials, first and second pellets, and polyamide resin compositions.

### 1. Relative viscosity

The relative viscosity of an aliphatic polyamide resin (A) was measured at 25°C with respect to a solution of 1 g of the polyamide resin in 100 ml of 96% sulfuric acid in accordance with JIS K 6920.

### 2. DSC measurement

Raw materials and polyamide resin compositions were each analyzed with a differential scanning calorimeter (DSC). The sample in an air atmosphere was heated to 280°C and was held at the temperature for 5 minutes, and the temperature was lowered to 0°C at a cooling rate of 20°C/min. The exothermic peak top temperature recorded in this process was taken as the crystallization temperature. Next, the sample was heated from 0°C to 280°C at a rate of 20°C/min, and the endothermic peak top temperature recorded in this process was obtained as the melting peak temperature (the melting point).

### 3. MFR (230°C and 2.16 kg load)

The MFR of raw materials, first and second pellets, and polyamide resin compositions was measured at 230°C under a load of 2.16 kg in accordance with ASTM D1238.

### 4. Amino group concentration

A predetermined amount of an aliphatic polyamide resin (A) was placed into a conical flask with a stopcock, and 40 mL of a previously prepared solvent: phenol/methanol (7/3 by volume) was added. The mixture was stirred using a magnetic stirrer to give a solution of the polyamide resin. The solution was titrated with 1/50N hydrochloric acid using thymol blue as an indicator to determine the terminal amino group concentration (eq/g). The amino group concentration (eq/g) of unstretched polyamide films a of Example 5 and Comparative Examples 4 and 8 was determined in the same manner.

### 5. Carboxyl group concentration

A predetermined amount of an aliphatic polyamide resin (A) was placed into a three-necked pear-shaped flask, and 40 mL of benzyl alcohol was added. The flask was immersed in an oil bath set at 180°C under a nitrogen stream. The mixture was stirred using a stirring motor attached to the top. The solution of the polyamide resin thus obtained was titrated with a 1/20N sodium hydroxide solution using phenolphthalein as an indicator to determine the terminal carboxyl group concentration (eq/g). The carboxyl group concentration (eq/g) of unstretched polyamide films a of Example 5 and Comparative Examples 4 and 8 was determined in the same manner.

### 6. Molecular weight by GPC measurement

GPC measurement was performed using HLC-8320GPO manufactured by TOSOH CORPORATION under the following conditions. The number average molecular weight Mn and the weight average molecular weight Mw were calculated relative to PMMA.
Columns: TSKgel Super AW3000 + TSKgel Super AW5000
Eluent: 10 mM CF₃COOHNa/TFE
Detector: RI
Temperature: 40°C
Flow rates: sample 0.3 ml/min, reference 0.15 ml/min
Sample concentration: approximately 0.1 wt/vol%
Injection volume: 20 µL

### [Raw materials used]

The raw materials used in Examples and Comparative Examples are as follows.
(1) Aliphatic polyamide resins (A)
   Polyamide resin (A-1): manufactured by UBE Corporation, polyamide 6 (relative viscosity: 2.2; melting point: 220°C; MFR measured at 230°C under a load of 2.16 kg in accordance with ASTM D1238: 60.0 g/10 min; terminal amino group concentration: 3.3 × 10⁻⁵ eq/g)
   Polyamide resin (A-2): manufactured by UBE Corporation, polyamide 6 (relative viscosity: 2.5; melting point: 220°C; MFR measured at 230°C under a load of 2.16 kg in accordance with ASTM D1238: 40.4 g/10 min; terminal amino group concentration: 4.5 × 10⁻⁵ eq/g)
   Polyamide resin (A-3): manufactured by UBE Corporation, polyamide 6 (relative viscosity: 2.7; melting point: 220°C; MFR measured at 230°C under a load of 2.16 kg in accordance with ASTM D1238: 25.0 g/10 min; terminal amino group concentration: 4.0 × 10⁻⁵ eq/g)
   Polyamide resin (A-4): manufactured by UBE Corporation, polyamide 6 (relative viscosity: 3.0; melting point: 220°C; MFR measured at 230°C under a load of 2.16 kg in accordance with ASTM D1238: 15.0 g/10 min; terminal amino group concentration: 3.0 × 10⁻⁵ eq/g)
   Polyamide resin (A-5): manufactured by UBE Corporation, polyamide 6 (relative viscosity: 3.4; melting point: 220°C; MFR measured at 230°C under a load of 2.16 kg in accordance with ASTM D1238: 6.4 g/10 min; terminal amino group concentration: 4.0 × 10⁻⁵ eq/g)
(2) Acid-modified ethylene/α-olefin copolymers (B)
   Maleic anhydride-modified ethylene/1-hexene copolymer (B-1): F3000 manufactured by UBE-MARUZEN POLYETHYLENE Co., Ltd. (melting point: 115°C; MFR measured at 230°C under a load of 2.16 kg in accordance with ASTM D1238: 8.5 g/10 min; maleic anhydride modification ratio: 1 mass%)
   Maleic anhydride-modified ethylene/1-octene copolymer (B-2): AFFINITY GA1000R manufactured by Dow Inc. (melting point: 68°C; MFR measured at 230°C under a load of 2.16 kg in accordance with ASTM D1238: 660.0 g/10 min; maleic anhydride modification ratio: 1 mass%)

### Example 1

10 mass% of the maleic anhydride-modified ethylene/1-hexene copolymer (B-1) was added to 40 mass% of the polyamide resin (A-1) as the first aliphatic polyamide resin (A1). The mixture was melt-kneaded with twin-screw kneading machine ZSK32 Mc Plus (manufactured by Coperion GmbH, screw diameter: 32 mm) at a twin-screw kneader cylinder temperature of 230°C, a screw rotational speed of 500 rpm, and a throughput of 75 kg/h to give first pellets. Next, second pellets were produced using the polyamide resin (A-5) as the second aliphatic polyamide resin (A2). Lastly, 50 mass% of the first pellets and 50 mass% of the second pellets were dry blended to give a pellet mixture. The formulation of the pellet mixture of Example 1 is described in Table 1.

Using the pellet mixture of Example 1, unstretched polyamide films a, c, and d, and a biaxially stretched polyamide film b were produced as follows.

### Unstretched polyamide film a

A 50 µm thick unstretched polyamide film a was produced from the pellet mixture of Example 1 using T-die film forming equipment of 40 mmφ Ex screw manufactured by Research Laboratory of Plastics Technology Co., Ltd.

### Biaxially stretched polyamide film b

An unstretched polyamide film having a thickness of 100 µm was produced from the pellet mixture of Example 1 using T-die film forming equipment of 40 mmφ Ex screw manufactured by Research Laboratory of Plastics Technology Co., Ltd. The unstretched polyamide film thus obtained was stretched using a biaxial stretching machine manufactured by Iwamoto Seisakusho Co., LTD at a stretching temperature of 100°C to a total of 9.0 times, 3.0 times in length and 3.0 times in width. A 15 µm thick biaxially stretched polyamide film b was thus produced.

### Unstretched polyamide film c

The pellet mixture of Example 1 was supplied to a single-screw extruder equipped with a T-die (T-die film forming equipment of 25 mmφ Ex screw manufactured by GM ENGINEERING Co., Ltd.) and was extruded under conditions where the cylinder temperatures in an extruder cylinder region divided into three sections were 190°C, 230°C, and 250°C, the adapter temperature was 250°C, the die temperature was 250°C, the screw rotational speed was 25 rpm, and the take-up speed was 3.0 m/min. A 40 µm thick unstretched polyamide film c was thus produced.

### Unstretched polyamide film d

The pellet mixture of Example 1 was supplied to a single-screw extruder equipped with a T-die (T-die film forming equipment of 40 mmφ Ex screw manufactured by Research Laboratory of Plastics Technology Co., Ltd.) and was extruded to give a 30 µm thick unstretched polyamide film d.

### Examples 2 to 7 and Comparative Examples 1 to 7

Pellet mixtures and polyamide films a to d of Examples 2 to 7 and Comparative Examples 1 to 7 were obtained in the same manner as in Example 1, except that the types and the proportions of the components were changed as described in Table 1.

### Comparative Example 8

Unstretched polyamide films a, c, and d, and a biaxially stretched polyamide film b were produced in the same manner as in Example 1, except that only pellets of the polyamide resin (A-5) were used. The formulation of the pellets of Comparative Example 8 is shown in the column of the second pellets in Table 1.

### Comparative Example 9

90 mass% of pellets of the polyamide resin (A-5) and 10 mass% of pellets of the maleic anhydride-modified ethylene/1-hexene copolymer (B-1) were extruded using T-die film forming equipment of 40 mmφ Ex screw manufactured by Research Laboratory of Plastics Technology Co., Ltd. to give a 50 µm thick unstretched polyamide film a. The resin pressure during the film formation was 5.1 MPa. The film obtained contained a significant amount of aggregates and did not have a normal film quality. Thus, the fabrication of the rest of the films and the evaluation thereof were canceled.

The formulations of Examples 1 to 7 and Comparative Examples 1 to 9 and the properties of the polyamide resin compositions obtained are described in Table 1.

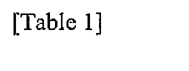

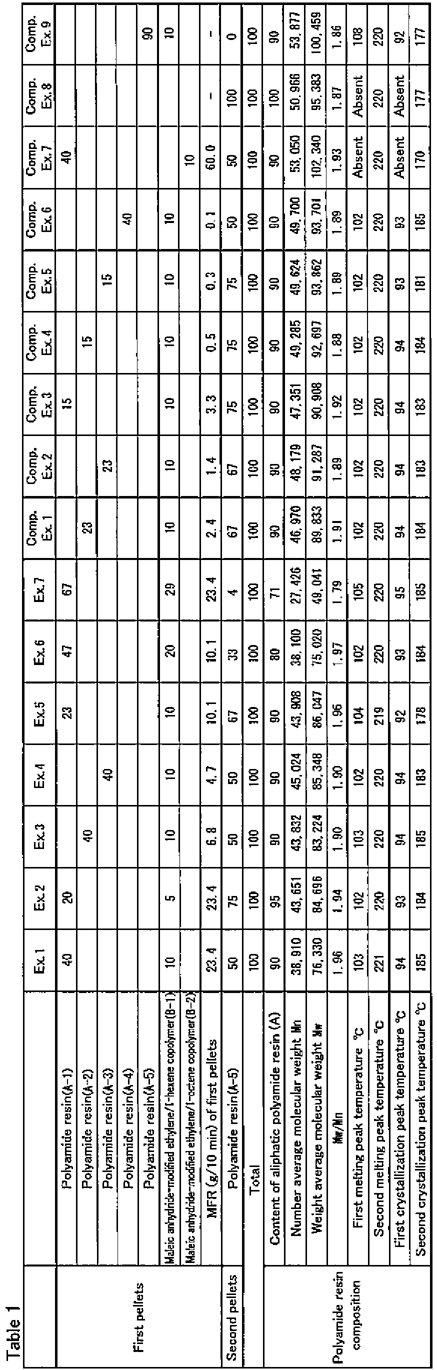

The unstretched polyamide films a of Example 5 and Comparative Examples 4 and 8 were also studied to measure the amino group concentration and the carboxyl group concentration. The results are described in Table 2.

**[Table 2]**

| | | | | |
|---|---|---|---|---|
| | Unit | Ex.5 | Comp Ex.4 | Comp Ex.8 |
| Amino group concentration | × 10⁻⁵ eq/g | 3.10 | 3.30 | 4.00 |
| Carboxyl group concentration | | 5.10 | 4.40 | 3.70 |

### [Evaluations]

The following characteristics were evaluated for the polyamide films produced in Examples 1 to 7 and Comparative Examples 1 to 8. The evaluation results are described in Table 3.

### 1. Resin pressure during film formation

The resin pressure at the outlet of the T-die film forming equipment was measured during the production of the unstretched polyamide film a. The formability was judged as good when the resin pressure was 0.5 to 4.0 MPa, and was evaluated as particularly excellent when the resin pressure was 1.0 to 3.0 MPa. This range of resin pressure allows the production speed in film formation to be increased, and can eliminate or reduce the occurrence of resin leakage from the forming machine.

### 2. Haze (Haze ratio)

The haze (haze ratio) of the unstretched polyamide films a and the biaxially stretched polyamide films b was measured in accordance with ASTM D-1003 using Haze Meter manufactured by NIPPON DENSHOKU INDUSTRIES Co., Ltd. The film was judged as practical when the haze ratio was 25% or less, as excellent in transparency when the haze ratio was 15% or less, and as particularly excellent in transparency when the haze ratio was 10% or less.

### 3. Glossiness (gloss value)

The glossiness (the gloss values) of the unstretched polyamide films a and the biaxially stretched polyamide films b was measured in accordance with ASTM D-523 using a digital variable angle glossmeter manufactured by Suga Test Instruments Co., Ltd. The glossiness was judged as practical when the gloss value was 50% or more, as excellent when the gloss value was 80% or more, and as particularly excellent when the gloss value was 100% or more.

### 4. Puncture test

The unstretched polyamide films a and the biaxially stretched polyamide films b were stored at 23°C and 50% RH for one day and were tested in accordance with JAS (P-1019) in the same environment using a needle with a 1.0 φ diameter and a 0.5 R tip shape to measure the elongation at break and the maximum point load. The acceptance criterion for the maximum point load was more than 5.0 N, and the puncture strength was judged as particularly excellent when the maximum point load was 6.0 N or more.

### 5. Friction coefficients

The unstretched polyamide films a and the biaxially stretched polyamide films b were stored at 23°C and 50% RH for one day and were tested in accordance with ASTM D-1894 in the same environment to measure the static friction coefficient and the kinetic friction coefficient five times each. The measurement results were averaged. The friction coefficients of the biaxially stretched polyamide film b of Comparative Example 8 were beyond the measurement limits.

The acceptance criteria for the static friction coefficient and the kinetic friction coefficient of the unstretched polyamide films a were each 1.0 or less.

### 6. Number of film gels

The unstretched polyamide films c obtained in Examples 1 to 7 and Comparative Examples 1 to 3, 7, and 8 were tested to measure the number of film gels that had been generated. The unstretched polyamide film c was analyzed on a fisheye counter manufactured by FUTEC INC. to measure online the number of film gels with a diameter of 50 to 99 µm, the number of film gels with a diameter of 100 to 199 µm, and the number of film gels with a diameter of 200 µm or more, per 0.04 m². The number of film gels (gels/0.04 m²) was thereby evaluated. The number of film gels described in Table 3 is the average of the results of 50 measurements. The acceptance criterion for the film gel count was 100 or less gels with a diameter of 50 to 99 µm per 0.04 m².

The unstretched polyamide films c of Comparative Examples 4 to 6 contained a significant amount of aggregates and thus were not tested for the number of film gels.

### 7. Pinhole resistance in low-temperature environment

The unstretched polyamide films d obtained in Examples 1 to 7 and Comparative Examples 1 to 8 were each tested by being flexed 1000 times at 5°C in accordance with MIL-B-131C using Gelvo type Flex-Cracking Tester equipped with a thermostatic chamber, manufactured by TESTER SANGYO CO,. LTD. The films after the flex test were each placed onto a recording paper, and India ink was spread thereon and was allowed to penetrate into the surface of the recording paper. The number of black spots that were recorded was counted. The pinhole resistance was evaluated based on the following criteria.
⊚: The number of black spots was 70 or less/0.03 m².
∘: The number of black spots was more than 70 to 100/0.03 m².
×: The number of black spots was more than 100/0.03 m².

### 8. Recyclability

The pellet mixtures or the pellets obtained in Examples 1 to 7 and Comparative Examples 1 to 8 were each extruded with a three-component three-layer air-cooled multilayer blown-film coextrusion machine (die bore diameter: 100 mmφ) manufactured by Dr. Collin GmbH. Thus, 100 µm thick three-layered laminate films were obtained in which a 20 µm thick polyamide resin composition layer, a 10 µm thick adhesive layer, and a 70 µm thick polyethylene layer were stacked in this order. ADMAR (registered trademark) LF128 (an acid-modified polyolefin resin) manufactured by Mitsui Chemicals, Inc. was used for the adhesive layer. F022NH (a low-density polyethylene resin) manufactured by UBE-MARUZEN POLYETHYLENE Co., Ltd. was used for the polyethylene layer. The laminate films obtained were each cut into flakes. Next, 20 mass% of the flakes were added to 80 mass% of the polyamide resin (A-5), and the mixture was melt-kneaded using twin-screw kneading machine ZSK32 Mc Plus (manufactured by Coperion GmbH, screw diameter: 32 mm) at a twin-screw kneader cylinder temperature of 230°C, a screw rotational speed of 500 rpm, and a throughput of 75 kg/h to give recycled pellets. The recycled pellets were supplied to a single-screw extruder equipped with a T-die (T-die film forming equipment of 40 mmφ Ex screw manufactured by Research Laboratory of Plastics Technology Co., Ltd.) to form a 50 µm thick unstretched polyamide film e. The appearance of the films was visually inspected and evaluated. The recyclability was evaluated based on the following criteria.
5: Particularly excellent recyclability. The film was free from unevenness on the film, contained no visible gels, and had very high transparency.
4: Excellent recyclability. The film was free from unevenness on the film, contained few gels, and had high transparency.
3: Good recyclability. The film contained gels, but was free from unevenness on the film and was transparent.
2: Poor recyclability. The film had significant amounts of gels and unevenness on the film, and was poor in transparency.
1: Very poor recyclability. Normal film formation was difficult.

The evaluation results of the films of Examples 1 to 7 and Comparative Examples 1 to 8 are described in Table 3. In Table 3, "Many gels" means that there were so many film gels and the number of film gels was not evaluated, and "Beyond limit" means that the property could not be measured.
[Table 3]

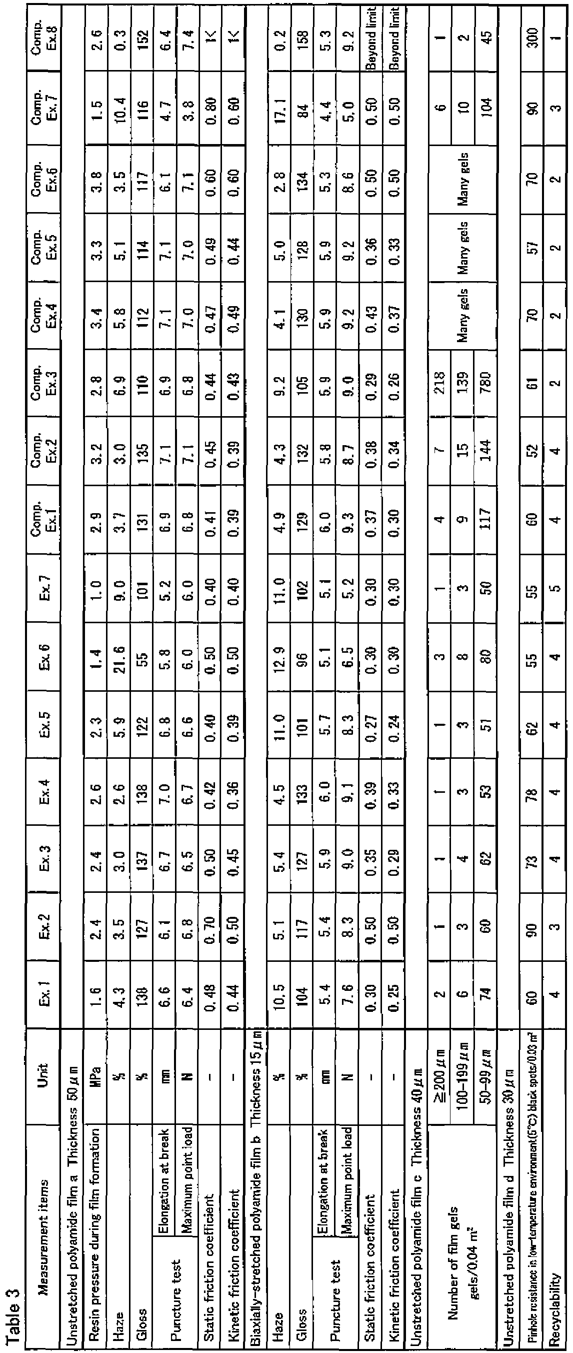

From Table 3, the compositions of Examples 1 to 7 are shown to give films that are free from deterioration in appearance stemming from film gels and excel in transparency, puncture strength, friction coefficients, and pinhole resistance, and also to have excellent material-recyclability. In Examples 1 to 7, the films were produced by melt-kneading a pellet mixture that included first pellets containing a first aliphatic polyamide resin (A1) and an ethylene/C3-C8 α-olefin copolymer (B) having a functional group, in a predetermined ratio; and second pellets containing a second aliphatic polyamide resin (A2). Thus, the components were successfully mixed together uniformly and the occurrence of film gels was reduced. In addition, the resin pressure during film formation was low and excellent formability was attained.

The polyamide resin compositions of Comparative Examples 1 to 6 included an aliphatic polyamide resin (A) and an ethylene/C3-C8 α-olefin copolymer (B) having a functional group, in a predetermined ratio, but their number average molecular weights Mn were more than 46,000. The films from these compositions contained many film gels and were unsatisfactory. Furthermore, the films formed for recyclability evaluation in Comparative Examples 3 to 6 had an appearance containing large amounts of gels and unevenness on the film and were poor in transparency; thus, these compositions were also poor in material-recyclability.

The polyamide resin composition in Comparative Example 7 had a number average molecular weight Mn of more than 46,000 and showed no first melting peak temperature. The films from this composition contained a large number of film gels and had a low maximum point load in the puncture test. The films of Comparative Example 8, which consisted solely of an aliphatic polyamide resin (A), had high friction coefficients and were poor in pinhole resistance and material-recyclability.

In Comparative Example 9, the polyamide resin composition had a number average molecular weight Mn of more than 46,000, and the film was formed by directly feeding pellets of an aliphatic polyamide resin (A) and of a copolymer (B) to a T-die film forming equipment without making the first pellets. The resin pressure during film formation was high, and the film that was obtained had a significant amount of aggregates and did not have a normal film quality.

### Industrial Applicability

The films obtained from the polyamide resin composition of the present invention are useful in that the films are suitably used in such applications as, in particular, food packaging applications and excel in material-recyclability after the films are disposed of.

## Claims

1. A polyamide resin composition comprising, based on 100 mass% of the polyamide resin composition, 70 to 95 mass% of an aliphatic polyamide resin (A), 5 to 30 mass% of an ethylene/C3-C8 α-olefin copolymer (B) having a functional group, and 0 to 5 mass% of an additional component (C),
the aliphatic polyamide resin (A) having a ratio of the number of methylene groups to the number of amide groups of 3 or more and 11 or less, and
the polyamide resin composition having an Mn of 25,000 to 46,000 and an Mw/Mn of 1.5 to 3.0, where Mn and Mw are the number average molecular weight and the weight average molecular weight, respectively, of the polyamide resin composition measured by GPC.

2. The polyamide resin composition according to claim 1, wherein the aliphatic polyamide resin (A) is an aliphatic homopolyamide.

3. The polyamide resin composition according to claim 1 or 2, wherein the aliphatic polyamide resin (A) is at least one selected from the group consisting of polyamide 4, polyamide 6, polyamide 11, polyamide 12, polyamide 46, polyamide 410, polyamide 56, polyamide 66, polyamide 510, polyamide 512, polyamide 610, polyamide 612, polyamide 1010, and polyamide 1012.

4. The polyamide resin composition according to claim 1 or 2, wherein the number average molecular weight Mn of the polyamide resin composition is 35,000 to 46,000.

5. The polyamide resin composition according to claim 1 or 2, wherein a DSC curve obtained by heating the composition from 0°C to 280°C at a rate of 20°C/min in an air atmosphere shows a first melting peak temperature in a range of 70 to 120°C and a second melting peak temperature in a range of 150 to 260°C.

6. The polyamide resin composition according to claim 1 or 2, wherein the composition has a concentration of amino groups of 2.0 × 10⁻⁵ to 3.5 × 10⁻⁵ eq/g and a concentration of carboxyl groups of 4.5 × 10⁻⁵ to 6.0 × 10⁻⁵ eq/g.

7. The polyamide resin composition according to claim 1 or 2, wherein the copolymer (B) is an ethylene/propylene copolymer, an ethylene/1-butene copolymer, or an ethylene/1-hexene copolymer each having a group derived from maleic anhydride.

8. The polyamide resin composition according to claim 1 or 2, which is substantially free of silica.

9. The polyamide resin composition according to claim 1 or 2, wherein when the polyamide resin composition is extruded into a 40 µm thick unstretched film under conditions including cylinder temperatures in an extruder cylinder region divided into three sections of 190°C, 230°C, and 250°C, an adapter temperature of 250°C, a die temperature of 250°C, a screw rotational speed of 25 rpm, and a take-up speed of 3.0 m/min, the number of 50 to 99 µm gels in gel measurement of the unstretched film is 100 or less/0.04 m².

10. A polyamide film comprising the polyamide resin composition described in claim 1 or 2.

11. A laminate film comprising three layers including a layer comprising the polyamide resin composition described in claim 1 or 2, an adhesive layer, and a polyolefin layer stacked in the order named.

12. A laminate film comprising five layers including an adhesive layer and a polyolefin layer stacked in the order named on each side of a layer comprising the polyamide resin composition described in claim 1 or 2.

13. The laminate film according to claim 11, wherein the layer comprising the polyamide resin composition is a biaxially stretched layer.

14. The laminate film according to claim 11, which is for food packaging.

15. A pellet mixture comprising:
first pellets comprising a first aliphatic polyamide resin (A1) and an ethylene/C3-C8 α-olefin copolymer (B) having a functional group; and
second pellets comprising a second aliphatic polyamide resin (A2),
the pellet mixture being such that:
100 mass% of the first pellets include 60 to 90 mass% of the first aliphatic polyamide resin (A1), 10 to 40 mass% of the ethylene/C3-C8 α-olefin copolymer (B) having a functional group, and 0 to 5 mass% of an additional component (C), the first pellets having an MFR of 1 to 40 g/10 min as measured at 230°C under a load of 2.16 kg in accordance with ASTM D1238,
the second aliphatic polyamide resin (A2) has a relative viscosity of 2.5 to 5.0 as measured at 25°C with respect to a solution of 1 g of the polyamide resin in 100 ml of 96% sulfuric acid in accordance with JIS K 6920; a melting point of 150 to 260°C; and an MFR of 1 to 20 g/10 min as measured at 230°C under a load of 2.16 kg in accordance with ASTM D1238,
the aliphatic polyamide resin (A1) and the aliphatic polyamide resin (A2) each have a ratio of the number of methylene groups to the number of amide groups of 3 or more and 11 or less, the copolymer (B) has a melting point of 70 to 120°C,
melt-kneading of the pellet mixture gives a kneaded product including, based on 100 mass% of the kneaded product, 70 to 95 mass% of a total of the first aliphatic polyamide resin (A1) and the second aliphatic polyamide resin (A2), 5 to 30 mass% of the ethylene/C3-C8 α-olefin copolymer (B) having a functional group, and 0 to 5 mass% of the additional component (C), and
the kneaded product has an Mn of 25,000 to 46,000 and an Mw/Mn of 1.5 to 3.0, where Mn and Mw are the number average molecular weight and the weight average molecular weight, respectively, of the kneaded product measured by GPC.

16. The first pellets for use by being mixed with the second pellets in production of the pellet mixture described in claim 15.

17. The second pellets for use by being mixed with the first pellets in production of the pellet mixture described in claim 15.
